# EUROPÄISCHE PATENTSCHRIFT

(11) **EP 0 872 322 B1**
(45) Veröffentlichungstag und Bekanntmachung des Hinweises auf die Patenterteilung: **29.01.2003**
(21) Anmeldenummer: 98106868.7
(22) Anmeldetag: 16.04.1998
(51) Int. Cl.: B29B 17/02, B03B 9/06, B02C 13/00

(54) **Verfahren und Vorrichtung zum Aufbereiten von Abfallprodukten auf Basis von Kunststoffen**
Method and device for treating plastic based waste
Procédé et dispositif pour traiter des déchets à base de matières plastiques

(30) Priorität: 16.04.1997 DE 19715772
(43) Veröffentlichungstag der Anmeldung: 21.10.1998
(73) Patentinhaber: Herrmann, Otto, 51570 Windeck (DE); Schwieger, Friedhelm, 33659 Bielefeld (DE)
(72) Erfinder: Herrmann, Otto, 51570 Windeck (DE); Schwieger, Friedhelm, 33659 Bielefeld (DE)
(74) Vertreter: Müller-Gerbes, Margot, Dipl.-Ing.

(56) Entgegenhaltungen:
- DE-A- 3 543 370
- DE-A- 4 200 827
- DE-A- 19 509 808
- DE-B- 1 274 334
- US-A- 2 963 230
- US-A- 5 510 076

## Beschreibung

Die Erfindung betrifft ein Verfahren zum Aufbereiten von Abfallprodukten auf Basis von Kunststoffen, Kunststoffverbundmaterialien, Spuckstoffen, enthaltend Kunststoffe, Zellulose, Leichtstoffe wie Papier, Pappe, Leichtschaumstoffe sowie Metallabfälle und Schmutzpartikel sowie Feuchte, zwecks Wiedergewinnung von wiederverwertbaren und verarbeitbaren Materialien, insbesondere Kunststoff und gegebenenfalls Zellulose, bei dem die Abfallprodukte durch Entfernen der Metallabfälle und Schmutzteilchen gereinigt und zu einem groben Rohmahlgut vorzerkleinert werden und das Rohmahlgut zu einem schüttfähigen Abfallgut feinstzerkleinert und getrocknet wird, wobei die Feinstzerkleinerung bei gleichzeitiger Auftrennung der Verbundmaterialien in einer Prallwirbelmühle mit Mahlluft unter Erzeugung energiereicher Turbulenzwirbel erfolgt, wobei Reibungswärme entsteht und die mit dem Rohmahlgut eingeführte Feuchte in Verdampfungsprodukte überführt wird und die Mahlluft und das Rohmahlgut über einen Einlaß und einen Ventilator in einen Mahlraum eingeführt und durch einen Auslaß aus dem Mahlraum die Mahlluft, das feinstzerteilte Abfallgut und die Verdampfungsprodukte abgeführt werden, wobei die Mahlluft im Inneren des Mahlraumes in Richtung des Auslasses abgesaugt wird und die Mahlluft zusammen mit den Verdampfungsprodukten und dem in die einzelnen Materialien aufgetrennten und feinstzerkleinerten Abfallgut aus dem Mahlraum in einen Stauraum überführt werden.

Des weiteren betrifft die Erfindung eine Anlage zum Durchführen des Verfahrens zur Aufbereitung von Abfallprodukten auf Basis von Kunststoff, Kunststoffverbundmaterialien und Spuckstoffen einschließlich Zellulose, Leichtstoffen, Metallabfällen, Schmutzpartikeln und Feuchte, umfassend mindestens eine erste Vorrichtung zum Vorzerkleinern der Abfallprodukte zu einem Rohmahlgut sowie gegebenenfalls Einrichtungen zum Reinigen und Abscheiden und Trennen für die in den Abfallprodukten außer Kunststoffen enthaltenen hiervon verschiedenen Materialien und eine weitere Vorrichtung zum Feinstzerkleinern des Rohmahlgutes in Gestalt einer Prallwirbelmühle mit einem Mahlraum mit einem Einlaß für Mahlluft und Rohmahlgut und einem Auslaß für Mahlluft und feinstzerkleinertes Abfallgut, wobei zwischen dem Einlaßbereich und dem Mahlraum ein Ventilator angeordnet ist und der Prallwirbelmühle ein Stauraum nachgeordnet ist und der Auslaß der Prallwirbelmühle mit dem Stauraum verbunden ist.

Zur Wiedergewinnung von Kunststoffen für eine erneute stoffliche Verwertung, insbesondere von thermoplastischen Kunststoffen für eine thermische Verarbeitung ist es erforderlich, die Kunststoffabfälle von Schmutzpartikeln, Verunreinigungen aller Art zu reinigen. Hierbei erfordert insbesondere die Entfernung von Wasser und Feuchte sowie von Zelluloseteilchen im weitesten Sinne aus Verbundmaterialien, Papier usw. sowie von Leichtschaumstoffteilchen, insbesondere Polystyrolteilchen, einen hohen Aufwand. Bei den bekannten Verfahren und Anlagen zum Aufbereiten von Kunststoffabfällen werden sowohl die Schmutzpartikel und Schwergutteilchen als auch die Zellulose- und Leichtstoffteilchen überwiegend naß oder schwimmend unter Zuhilfenahme von Wasser aussortiert und abgetrennt. Hierfür ist ein hoher Aufwand an Wasser erforderlich, wobei insbesondere die restlose Entfernung von Zelluloseteilchen Schwierigkeiten bereitet.

Für die Zerkleinerung der Kunststoffabfälle werden üblicherweise in einer ersten Stufe für die Vorzerkleinerung sogenannte Shredder eingesetzt, während für die Feinstzerkleinerung Prallwirbelmühlen benutzt werden.

Prallwirbelmühlen für die Feinstzerkleinerung von vorzerkleinerten Kunststoffabfällen sind beispielsweise aus der DE 35 43 370 A1 oder den deutschen Gebrauchsmustern DE 295 15 434 U1 oder DE 295 15 433 U1 sowie der
DE 42 00 827 A1 bekannt. Das Zerkleinerungsprinzip der Prallwirbelmühle beruht auf einem hohen Luftdurchsatz, wobei die Mahlluft durch die rotierenden und die feststehenden Teile der Mühle und eine geeignete Luftführung in eine erhebliche Turbulenz versetzt wird. Das in die Mahlluft eindosierte zu mahlende Gut wird hierbei einer Vielzahl schnell wiederholter Prallwirkungen, Scherwirkungen und/oder Reibwirkungen unterzogen und dabei feinstzerkleinert. Die bei der Feinstzerkleinerung durch die Reibwirkungen entstehende Reibungswärme wird von der Mahlluft aufgenommen und führt zugleich zu der Verdampfung der mit dem zu mahlenden Gut mitgeschleppten Feuchte, so daß in der Prallwirbelmühle neben der Feinstzerkleinerung auch eine Trocknung des Gutes erfolgt. Bei den bekannten Prallwirbelmühlen ist hierzu zwischen dem Einlaßbereich für das Rohmahlgut und die Mahlluft und dem Mahlraum ein Ventilator angeordnet, um eine ausreichende Luftzufuhr sicherzustellen. Die Auslaßöffnung der Prallwirbelmühle hingegen ist entweder direkt oder über Abscheider, wie beispielsweise Zyklone mit einem Ventilator verbunden.

Allerdings werden die Prallwirbelmühlen durch Kunststoffabfälle bei der Feinstzerkleinerung hoch beansprucht, so daß die Verschleißteile im Mahlraum, wie Messer sowie Prallteile, sehr schnell verschleißen und ausgewechselt werden müssen. Dies beeinträchtigt erheblich die Wirtschaftlichkeit des Einsatzes derartiger Prallwirbelmühlen für die Wiederaufbereitung von Kunststoffabfällen und Kunststoffverbundabfällen.

Der Erfindung liegt die Aufgabe zugrunde, ein wirtschaftliches Verfahren sowie eine Anlage hierfür zum Aufbereiten von Abfallprodukten auf Basis von Kunststoffen, Leichtstoffen und Zellulose zu schaffen, bei dem am Ende ein stofflich sauber von allen anderen Materialien getrenntes schüttfähiges Kunststoffpulver erhalten wird, das trocken ist und eine geringe Restfeuchte, bezogen auf den Kunststoff, aufweist und damit im Falle von thermoplastischen Kunststoffabfällen unmittelbar wieder einer thermischen Verwertung, zum Beispiel Extrusion, zuführbar ist.

Diese Aufgabe wird gemäß der Erfindung mit einem Verfahren mit den Merkmalen des Patentanspruches 1 und mit einer Anlage mit den Merkmalen des Patentanspruches 8 gelöst.

Ausgehend von bekannten Verfahren zum Aufbereiten von Abfallprodukten auf Basis von Kunststoffen und Kunststoffverbundmaterialien gemäß Gattungsbegriff, wird erfindungsgemäß vorgeschlagen, ein Sog in Richtung Auslaß mittels eines zwischen dem Mahlraum der Prallwirbelmühle und dem Auslaß angeordneten Ventilators mit einer größeren Förderleistung als derjenigen des Ventilators im Einlaßbereich erzeugt wird, wobei in dem Stauraum ein über dem innerhalb des Mahlraumes liegender Druck erzeugbar ist und die Verdampfungsprodukte zusammen mit der Mahlluft aus dem Stauraum nach oben abgeführt werden und das feinstzerkleinerte Abfallgut in dem Stauraum unter Einwirkung der Schwerkraft nach unten fällt und von den Verdampfungsprodukten befreit in trockenem Zustand aus dem Stauraum ausgetragen wird. Unter Verdampfungsprodukten wird hier auch noch in der Mahlluft enthaltene Feuchte verstanden.

Das erfindungsgemäße Verfahren zeichnet sich dadurch aus, daß als Rohmahlgut ein lediglich vorzerkleinertes und von Schmutzpartikelchen sowie Metallteilchen gereinigtes Abfallprodukt auf Basis von Kunststoffen und Kunststoffverbundmaterialien und/oder Spuckstoffen eingesetzt wird, das also noch Zelluloseteilchen und auch Leichtstoffteilchen, wie Leichtschaumstoffe, zum Beispiel Polystyrol, enthält. Unter Zelluloseteilchen werden im Sinne der Erfindung Papier, Zellstoffe, Pappe usw. verstanden, die als Verunreinigung oder im Verbund mit Kunststoffverbundmaterialien im Abfallprodukt enthalten sind. Spuckstoffe sind Abfälle aus der Papierindustrie, die überwiegend Zellulose enthalten und schwierig zu verwerten sind, wie Papierabfälle, -abschnitte, Papierlaminatabfälle, Verpackungsabfälle, die oft noch mit Metallklammern, Aluminiumfolie oder Kunststoffolie im Verbund auftreten.

Gemäß dem erfindungsgemäßen Verfahren wird das vorgenannte Rohmahlgut in einer Prallwirbelmühle feinstzerkleinert und die Verbundmaterialien zu den einzelnen Werkstoffenin Feststoffteilchen aufgetrennt, wobei das feinstzerkleinerte Abfallgut dann Feststoffteilchen aus Kunststoff, Zelluloseteilchen und sonstige Leichtstoffteilchen enthält.

Durch die Überführung der die Verdampfungsprodukte und Feuchte enthaltenden Mahlluft einschließlich des feinstzerkleinerten Abfallgutes in einen Stauraum ist es möglich, die Trennung der Feuchte und der Feststoffteilchen vorzunehmen. Es wird ein starker Luftsog in dem Mahlraum von unten nach oben geschaffen, in dem die Teilchen des Mahlgutes nach oben getragen werden. Gleichzeitig ermöglicht der Stauraum das Absetzen der feinstzerkleinerten Teilchen nach unten und das Abführen der Mahlluft einschließlich der Verdampfungsprodukte und damit der Feuchtigkeit nach oben. Die feinstzerteilten Teilchen verlassen dann den Stauraum in trockener Form.

In Weiterbildung der Erfindung wird erst das aus dem Stauraum ausgetragene und trockene feinstzerkleinerte Abfallgut nachfolgend einer Trockenabscheidung zum Abtrennen und Ausscheiden der Zelluloseteilchen und sonstigen Leichtstoffteilchen unterworfen, wobei sowohl die Zelluloseteilchen als auch die Leichtstoffteilchen abgesaugt werden und als Restgut gereinigtes und trockenes und schüttfähiges Kunststoffpulver oder -mahlgut als wiederaufbereitetes Produkt für erneute stoffliche Verwertung und Verarbeitung erhalten wird. Insbesondere ist es möglich, mit dem erfindungsgemäßen Verfahren als Restgut wiederaufbereiteten Kunststoff mit einer Restfeuchte unter 1 Gew.-%, bevorzugt von weniger als 0,5 Gew.-%, vorzugsweise weniger als 0,4 Gew.-% bezogen auf das Gewicht des Kunststoffs, zu erhalten. Dies ist von wesentlicher wirtschaftlicher Bedeutung, da beispielsweise Kunststoff nur einer thermoplastischen Verarbeitung wie Extrusion zugeführt werden kann, wenn es eine Restfeuchte unter 0,6 Gew.-% enthält.

Mit dem erfindungsgemäßen Verfahren ist es nun möglich, nicht nur wiederaufbereiteten feinstzerkleinerten Kunststoff in schüttfähiger Form mit einer Restfeuchte unter 0,5 Gew.-% zu erhalten, sondern auch das Abscheiden von Zelluloseteilchen und Leichtstoffteilchen erst nach der Feinstzerkleinerung durch Trockenabscheidung mit Unterdruck durchzuführen.

Vorteilhafte Weiterbildungen des erfindungsgemäßen Verfahrens sind den kennzeichnenden Merkmalen der Unteransprüche 2 bis 7 entnehmbar.

Da bei der Prallzerkleinerung des Rohmahlgutes in der Prallwirbelmühle erhebliche Reibungswärme entsteht, die von der Mahlluft aufgenommen wird ebenso wie von der Prallwirbelmühle, ist sicherzustellen, daß die Mahlluft nicht zu heiß wird. Andererseits ist auch eine Mindestwärme der Mahlluft wünschenswert, um die Feuchte aus dem Rohmahlgut aufzunehmen. Das von dem Rohmahlgut mit in die Prallwirbelmühle eingeschleppte Wasser leistet keinen effektiven Beitrag zur Kühlung, da es beim Wirbeln herausgeschleudert wird und verdampft und mit der Mahlluft ausgetragen wird.

Erfindungsgemäß wird daher vorgeschlagen, die Temperatur der den Mahlraum in Richtung Stauraum verlassenden Mahlluft zu messen und in Abhängigkeit von der gemessenen Temperatur der Mahlluft zusätzliches Wasser in den Mahlraum zwecks Verdampfung zur Erniedrigung der Temperatur der Mahlluft einzuführen. Hierbei wird bei der Verarbeitung von Kunststoff und Kunststoffabfällen zusätzliches Wasser eingeführt, um die Mahllufttemperatur am Meßpunkt in einem Bereich von 8 bis 30°C unterhalb der Siedetemperatur von Wasser bei Atmosphärendruck zu halten, also bei etwa 70 bis 92°C. Bevorzugt wird das zusätzliche Wasser diskontinuierlich in Intervallen oder stoßweise in den Mahlraum eingebracht, beispielsweise in den Mahlluftstrom eingespritzt.

In Weiterbildung des erfindungsgemäßen Verfahrens wird vorgeschlagen, die Verweilzeit des Rohmahlgutes in dem Mahlraum in Abhängigkeit von dem Druck in dem Stauraum zu dem Druck in dem Mahlraum einzustellen, dergestalt, daß bei vorgegebenem Druck in dem Mahlraum bei Erhöhung des Druckes in dem Stauraum die Verweilzeit des Rohmahlgutes in dem Mahlraum verlängert bzw. bei Erniedrigung des Druckes die Verweilzeit des Rohmahlgutes in dem Mahlraum verkürzt wird.

Auf diese Weise kann der Durchsatz des Rohmahlgutes durch die Mühle gesteigert werden, wenn jedoch die Verweilzeit zu kurz bemessen ist, dann bleibt das Rohmahlgut zu feucht, da nicht genügend Feuchtigkeit herausgeschleudert wird und verdampfen kann. Bevorzugt wird im Stauraum ein um mindestens 1 bar, vorzugseise etwa 2 bar höherer Druck als dem innerhalb des Mahlraumes herrschenden Druck aufrechterhalten.

Bei dem erfindungsgemäßen Verfahren ist es möglich, ein Rohmahlgut mit bis zu 50 Gew.-% Wasser, wobei auch Öle, Fette, Cremes enthalten sein können, in der Prallwirbelmühle mit Hilfe der Mahlluft und entsprechender Turbulenzen feinstzuzerkleinern, wobei diese Produkte verdampfen bzw. in feinster Zerteilung von den übrigen Feststoffteilchen separiert und mit der Mahlluft ausgetragen werden.

Das erfindungsgemäße Verfahren kann sowohl für die Aufbereitung von Abfallgut mit bis zu mehr als 90 Gew.-% Anteil Kunststoffabfälle als auch mit bis zu 70-80 Gew.-% Anteil zellulosehaltiger Materialien und nur geringen Anteilen an Kunststoff angewendet werden.

Vorteilhafte Weiterbildungen der erfindungsgemäßen Anlage zum Durchführen des Verfahrens und Aufbereiten von Abfallprodukten auf Basis von Kunststoffen und Kunststoffverbundmaterialien sind den kennzeichnenden Merkmalen der Ansprüche 8 bis 18 entnehmbar.

Zur Erhöhung der Wirtschaftlichkeit der Anlage, insbesondere der Zerkleinerung des Rohmaterialgutes wird vorgeschlagen, die Prallwirbelmühle zwischen Mahlraum und Auslaßbereich mit einem weiteren Ventilator auszurüsten, wobei die Förderleistung des Ventilators im Ausgangsbereich größer ist als diejenige des Ventilators im Einlaßbereich, so daß ein Sog in Richtung Auslaßbereich in dem Mahlraum erzeugbar ist und in dem Stauraum ein über dem innerhalb des Mahlraumes der Prallwirbelmühle liegender Druck erzeugbar ist. Auf diese Weise wird der Transport des Rohmahlgutes innerhalb der Prallwirbelmühle in einer Richtung vom Einlaß zum Auslaß durch langsames Schweben im Mahlluftstrom mit einem Luftsog sichergestellt.

Auf diese Weise wird es möglich, zu verhindern, daß die Teilchen des Rohmahlgutes und die durch die Feinstzerkleinerung entstehenden Teilchen zu stark an den Konstruktionsteilen der Prallwirbelmühle anschlagen, wodurch der Verschleiß erheblich verringert wird. Die Feinstzerkleinerung erfolgt fast ausschließlich durch die auf Grund der Konstruktion der Prallwirbelmühle erzeugten Turbulenzen und Luftwirbel, die zu einem Zusammenprallen und zerkleinern der Teilchen führen.

Es ist wesentlich, daß in dem der Prallwirbelmühle nachgeordneten Stauraum durch die Aufstauung der eingeführten Mahlluft ein Gegendruck erzeugt wird, der mindestens 1 bar über dem innerhalb des Mahlraumes herrschenden Druck liegen sollte. Des weiteren ist nach einem weiteren Vorschlag der Erfindung der Druck im Stauraum mittels der Förderleistung der Zellenradschleuse und/oder der Veränderung der Abzugsleistung für die Mahlluft und Verdampfungsprodukte über die Abzugsleitung aus dem Stauraum regelbar.

Der Austrag der feinstzerkleinerten Feststoffteilchen des Abfallgutes aus dem Stauraum, insbesondere einem Silo, geschieht mittels einer im unteren Bereich des Silos angebrachten Zellenradschleuse. Die Zellenradschleuse ist mit der Druckleitung einer pneumatischen Förderanlage verbunden und besteht aus einem um eine horizontale Achse langsam rotierenden Zellenrad, in das die Feststoffteilchen aus dem Silo hineinfallen und von dem Zellenrad gleichmäßig in die Druckleitung gefördert werden. Das Zellenrad übernimmt gleichzeitig die Abdichtung zwischen Silo und der Druckleitung. Auch die Abzugsleitung für die Mahlluft einschließlich der Verdampfungsprodukte aus dem Stauraum kann mit einer Klappe oder dergleichen versehen sein, deren Öffnungsquerschnitt regelbar ist, so daß auch hier entsprechend der Druck im Stauraum regelbar ist.

Um die Temperatur der aus der Prallwirbelmühle austretenden Mahlluft zu messen, ist eine Temperaturmeßeinrichtung im Bereich der Verbindungsleitung für die Mahlluft zwischen dem Auslaß der Prallwirbelmühle und dem Stauraum vorgesehen.

Für die Beeinflussung der Temperatur der Mahlluft wird bevorzugt die Zufuhr von zusätzlichem Wasser in den Mahlraum mit der Mahlluft vorgesehen. Eine solche Einrichtung zum Einspritzen von Wasser in den Mahlraum kann beispielsweise im Bereich der Zuführung der Mahlluft in den Mahlraum, d.h. zu der Prallwirbelmühle angeordnet sein. Des weiteren wird erfindungsgemäß vorgeschlagen, das mittels der Einrichtung zum Einspritzen von Wasser in den Mahlraum einzuführende Wasser in bezug auf die Menge und die Zeitabhängigkeit in Abhängigkeit von der mittels der Temperaturmeßeinrichtung gemessenen Temperatur der Mahlluft beim Verlassen der Prallwirbelmühle zu steuern.

In Weiterbildung der erfindungsgemäßen Anlage wird vorgeschlagen, das Abscheiden der Zelluloseteilchen und Leichtstoffteilchen aus dem trockenen und feinstzerkleinerten Abfallgut mittels einer mittels Unterdruck arbeitenden Trockenabscheidevorrichtung vorzunehmen, die über eine pneumatische Materialförderleitung mit der Zellenradschleuse des Stauraumes verbunden ist, über die das feinstzerteilte Abfallgut zugeführt wird und die Zelluloseteilchen und Leichtstoffteilchen in der Trockenabscheidevorrichtung durch Absaugen in trockener Form abgetrennt und abgeführt werden und hiernach als Restgut gereinigtes wiederaufbereitetes und schüttfähiger Kunststoff erhalten wird.

Die erfindungsgemäße Anlage kann sowohl für die Aufbereitung von überwiegend trockenen Abfallprodukten als auch von sehr nassen und verschmutzten Abfallprodukten eingesetzt werden. Wenn die Anlage ausschließlich für die Verarbeitung von überwiegend trockenen Abfallprodukten eingesetzt werden soll, wird ein Aufbau gemäß den kennzeichnenden Merkmalen des Anspruches 17 vorgeschlagen.

Wenn die Anlage für die Verarbeitung von sehr nassen und verschmutzten Abfallprodukten eingesetzt werden soll, so wird vorgeschlagen, zusätzlich zu der Anlage für die Verarbeitung von trockenen Abfallprodukten eine Waschanlage mit einer Schwergutaustragsfördereinrichtung vorzusehen, die nach der Vorzerkleinerung, d.h. nach einer Einrichtung zum Vorzerkleinern wie einem Shredder, vorgesehen wird, siehe die kennzeichnenden Merkmale des Anspruches 18. Abscheidevorrichtungen für Metallabfälle, und zwar getrennt nach FE- und NE-Metallen, sind mindestens jeweils vor der Einrichtung zum Vorzerkleinern der Abfallprodukte vorzusehen, gegebenenfalls auch noch danach.

Für die Feinstzerkleinerung des Rohmahlgutes wird erfindungsgemäß als Prallwirbelmühle ein Prallreaktor mit mehreren den Mahlraum unterteilenden Mahlstufen vorgeschlagen, der gemäß den kennzeichnenden Merkmalen des Anspruches 14 ausgebildet ist. Er weist eine allen Mahlstufen gemeinsame Trommel als Stator mit einer mit mehreren übereinander angeordneten Mahlstufen ausgerüsteten Welle als Rotor auf, wobei jede Mahlstufe von einer an der Welle befestigten Aufnahmeplatte mit einer Vielzahl von am Umfang befestigten Messern gebildet ist und zwischen der Trommelinnenwand und den Messern ein Förderspalt für das Rohmahlgut durchgängig ausgebildet ist und jede Aufnahmeplatte einer Mahlstufe Durchbrechungen und die Wellenachse X der Welle in senkrechter Lage angeordnet ist und unterseitig der Trommel ein Einlaß zentral ausgebildet ist und der Einlaß mit einem Zufuhrkanal für Mahlluft und einem Zufuhrkanal für das Rohmahlgut verbunden ist und ein Auslaß an der Oberseite der Trommel radial austretend ausgebildet ist und zwischen Einlaß und erster Mahlstufe ein unterer Ventilator und oberhalb der letzten Mahlstufe ein oberer Ventilator jeweils auf der Welle des Rotors angeordnet und befestigt ist, wobei der obere Ventilator mit einer um mindestens 10 %, insbesondere 15 bis 30 % höheren Förderleistung als der Förderleistung des unteren Ventilators ausgerüstet ist.

Der erfindungsgemäße Prallreaktor ist robust und einfach aufgebaut, indem er eine einzige Welle aufweist, die mittels eines Antriebes antreibbar ist und hieran sowohl die Ventilatoren als auch die den Mahlraum und die Mahlstufen bildenden Teile befestigt sind. Der Luftsog zwischen Eingang und Ausgang des Mahlraumes wird durch die beiden Ventilatoren in der Größenordnung durch entsprechende Ausbildung der Ventilatoren mit ihren Flügeln - Größe, Anzahl - fest eingestellt. Damit ist immer ein Mindestluftsog sichergestellt. Eine zusätzliche Regelung der beiden Ventilatoren in Abhängigkeit voneinander ist nicht erforderlich. Eine weitere Steuerung erfolgt durch den der Prallwirbelmühle und dem oberen Ventilator nachgeschalteten Stauraum, beispielsweise Silo, der einen Gegendruck erzeugt. Erfindungsgemäß wird der Gegendruck im Stauraum so gesteuert, daß dort nicht mehr Mahlluft herausgelassen wird, wie durch den Ventilator im Eingangsbereich der Prallwirbelmühle hereingezogen wird. Dadurch, daß der obere Ventilator jedoch mehr Mahlluft aus der Prallwirbelmühle herauszieht als am Einlaßbereich hereingelassen wird, entsteht ein Luftsog in der Prallwirbelmühle, wodurch die Feststoffteilchen bei der Feinstzerkleinerung schonend durch die Prallwirbelmühle hindurchgetragen werden und nur wenig Verschleiß an derselben entsteht. Die Verbindungsleitung zwischen Prallreaktor und Stauraum, insbesondere Silo, weist bevorzugt am Auslaß des Prallreaktors einen Diffusor auf.

Eine besonders hohe Turbulenz- und Wirbelbildung wird mit der Ausbildung einer Profilierung an der Trommelinnenseite gemäß den kennzeichnenden Merkmalen des Anspruches 15 erreicht.

Vorteilhafte Ausgestaltungen der Erfindung und Durchführung des Verfahrens in einer Anlage mit weiteren Einzelheiten werden in der Zeichnung dargestellt und nachfolgend erläutert.
Es zeigen
- Fig. 1: ein Anlagenschema für die Verarbeitung von überwiegend trockenen Abfallprodukten auf Basis von Kunststoffen und Kunststoffverbundmaterialien
- Fig. 2: ein Schema einer Anlage für die Verarbeitung von überwiegend verschmutzten nassen Abfallprodukten auf Basis von Kunststoffen und Kunststoffverbundmaterialien
- Fig. 3: einen Querschnitt einen Prallreaktor zur Anwendung in einer erfindungsgemäßen Anlage und für das erfindungsgemäße Verfahren gemäß Fig. 1 oder 2.
- Fig. 4: das Detail A gemäß Fig. 3
- Fig. 5: ein weiteres Anlagenschema zum Aufbereiten von überwiegend trockenen überwiegend Kunststoff enthaltenden Abfällen
- Fig. 6: die Anlage nach Fig. 5 erweitert um eine Waschanlage für stark verschmutzte Abfälle
- Fig. 7: ein Anlagenschema zum Aufbereiten von Spuckstoffen, enthaltend überwiegend Zelluloseabfälle.

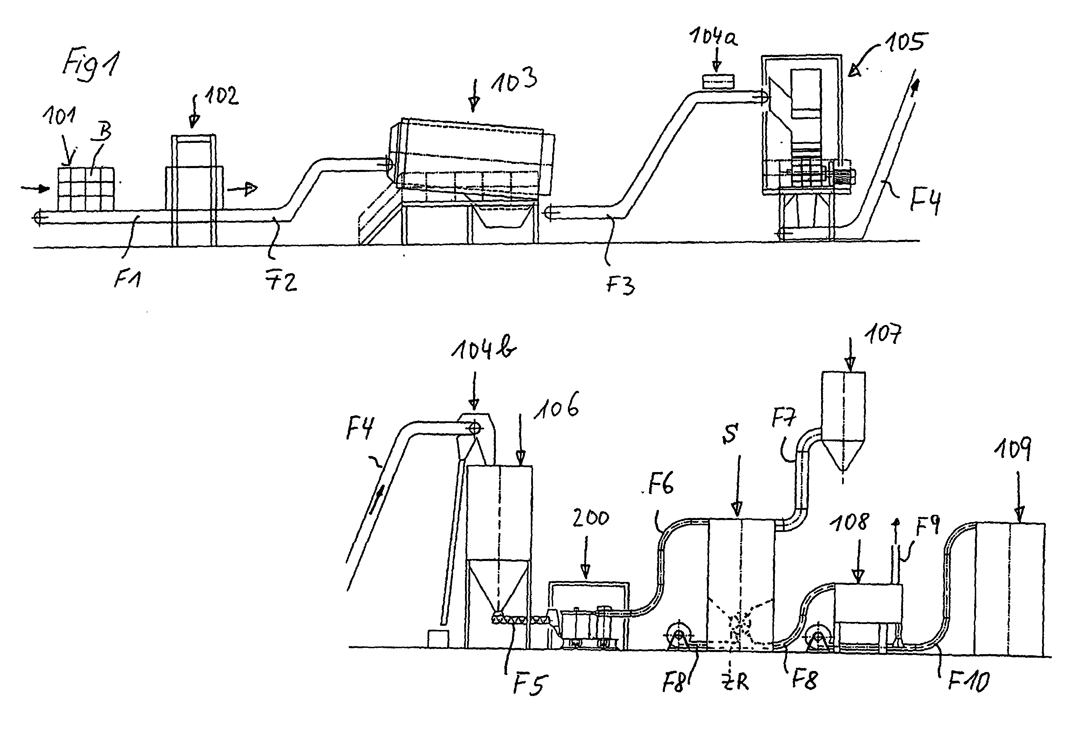

Die Anlage gemäß Fig. 1 weist eingangs eine Materialaufgabevorrichtung 101 für die in kompaktierter Form, wie Ballen B, angelieferten Abfallprodukte auf. Abfallprodukte sind hier beispielsweise Abfallfolien aus thermoplastischem Kunststoff aus der Landwirtschaft oder Kunststoffflaschen und Behälter aus thermoplastischen Kunststoffen, die Schmutzpartikel enthalten, Zelluloseteilchen, Papier und gegebenenfalls auch Leichtschaumstoffteilchen, wie Styropor, Metallabfälle oder dergleichen. Die Ballen B werden über eine Fördereinrichtung F1, zum Beispiel Förderband, einer Ballenlöser 102 zugeführt und von hier die aufgeschnittenen Ballen mittels einer weiteren Fördereinrichtung F2, beispielsweise Förderband, einer Einrichtung 103 zur Materialvorreinigung, zum Beispiel einer Siebtrommel. Das vereinzelte Ballengut wird dann mittels einer weiteren Fördereinrichtung F3, beispielsweise Förderband, einer Einrichtung zum Vorzerkleinern 105, beispielsweise einem Shredder, zugeführt. Vor dem Einführen des aufgelösten Ballengutes in den Shredder kann beispielsweise eine Metallabscheidevorrichtung 104a zum Abscheiden von Metallteilen (Fe) vorgesehen sein. Einrichtungen, wie Materialaufgabe 101, Ballenaufschneider 102, Siebtrommel 103, Metallabscheider 104a und Shredder 105 sind bekannt.

Das in dem Shredder 105 vorzerkleinerte Abfallprodukt wird über eine weitere Fördereinrichtung F4, beispielweise ein Förderband oder eine pneumatische Fördereinrichtung, einem Vorratsbehälter 106 aufgegeben. Vor dem Einfallen in den Vorratsbehälter 106 kann eine weitere Vorrichtung zum Metallabscheiden 104b - NE-Metalle - an der Förderleitung F4 angeordnet sein, um restliche Metallteile abzuscheiden. Es werden sowohl FE- als auch NE-Metalle aus dem Abfallgut mittels der Metallabscheider entfernt. In den Vorratsbehälter 106 befindet sich dann das durch Vorzerkleinerung, Reinigung und Metallabscheidung erhaltene Rohmahlgut, das nun nur noch die Verbundmaterialien, Kunststoff, Zellulose und sonstige Leichtstoffteilchen enthält. Dieses Rohmahlgut wird anschließend dem Prallreaktor 200 zur Feinstzerkleinerung zugeführt, beispielsweise kontinuierlich mittels einer Fördereinrichtung F5 in Gestalt einer Dosierschnecke. Der Prallreaktor ist als Prallwirbelmühle ausgebildet. Das den Prallreaktor verlassende Abfallgut ist in die einzelnen Materialien als Feststoffteilchen aufgetrennt und feinstzerkleinert. Es wird einschließlich der Mahlluft einem Silo S über die Verbindungsleitung F6 zugeführt. Die Verbindungsleitung wird im obersten Bereich des Silos zugeführt, der Silo bildet einen Stauraum und enthält in seinem unteren Bereich eine Zellenradschleuse ZR. Die Mahlluft einschließlich der Verdampfungsprodukte und Feuchtigkeit wird aus dem Silo S im oberen Bereich über die Abzugsleitung F7 abgezogen und einem Filter 107 zugeführt und abgelassen. Das Abfalllgut bleibt trocken zurück, nämlich ohne die Verdampfungsprodukte - Wasserdampf. Die Zellenradschleuse ZR des Silos S dient der Materialförderung der Feststoffteilchen, nämlich der feinstzerkleinerten Teilchen des Rohmahlgutes in Gestalt von Kunststoffpulverteilchen, Zelluloseteilchen und sonstigen Leichtstoffteilchen. Diese Feststoffteilchen, die aus dem in dem Prallreaktor feinstzerkleinerten Rohmahlgut erhalten werden, werden mittels der Zellenradschleuse aus dem Silo über eine pneumatische Förderleitung F8 ausgetragen und einer Trockenabscheidevorrichtung 108 zugeführt. Solche Trockenabscheidevorrichtungen sind beispielsweise aus der Papierindustrie bei der Verarbeitung von Pulpe bekannt. Diese Trockenabscheidevorrichtung arbeitet ebenfalls mit Unterdruck und Gegenströmung und hier werden die Leichtstoffteilchen und die Zelluloseteilchen aus dem Silo über die Zellenradschleuse angeförderten Abfallgut über die Absaugleitung F9 abgesaugt und das so gereinigte und zurückgebliebene Restgut, nämlich die Kunststoffpulverteilchen aus der Trockenabscheidevorrichtung 108, über die pneumatische Förderleitung F10 in einen Vorratsbehälter 109 ausgetragen. Das in dem Vorratsbehälter 109 ankommende Restgut ist gereinigtes und trockenes Kunststoffpulver mit einer Restfeuchte unter 1 %, vorzugsweise unter 0,5 %, so daß es unmittelbar einer Wiederverwertung, zum Beispiel Verarbeitung durch Extrusion oder Spritzgießen oder dergleichen, zu neuen Produkten zugeführt werden kann.

Wie aus der Beschreibung der erfindungsgemäßen Anlage hervorgeht, arbeitet diese mit relativ wenig Aufwand und ohne aufwendige Naßabscheidungen. Gemäß der Erfindung erfolgt das Separieren und Abscheiden von Leichtstoffteilchen und Zelluloseteilchen erst nach der Feinstzerkleinerung und Auftrennung und Trocknung der Abfallprodukte in einer Prallwirbelmühle im trockenen Zustand.

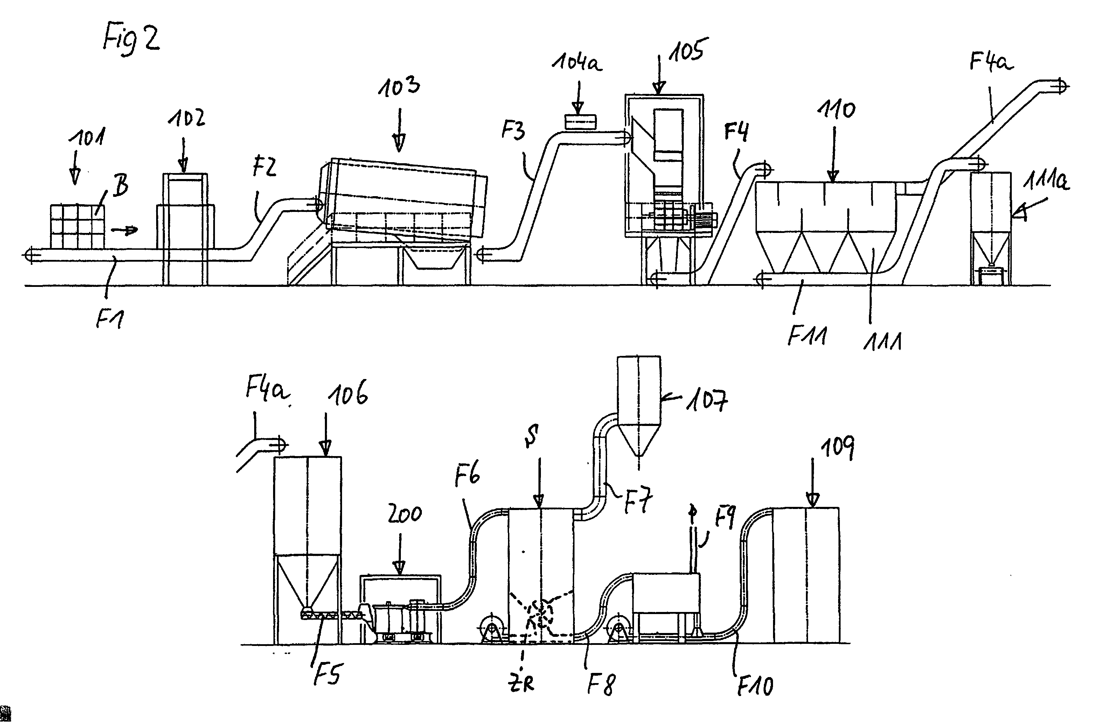

Wenn sehr verschmutzte und nasse Abfallprodukte verarbeitet werden sollen, wird die Anlage, wie in der Fig. 2 ersichtlich, um eine Waschanlage 110 mit Schwergutaustrag 111 mittels einer Fördereinrichtung F11 ergänzt, die nach der Einrichtung 105 für die Vorzerkleinerung des Abfallgutes und vor dem Vorratsbehälter 106 für das Rohmahlgut angeordnet ist. Für den Schwergutaustrag ist noch zusätzlich am Ende der Fördereinrichtung F11 eine Entwässerungspresse 111a vorgesehen. Je nach Verschmutzung des Abfallproduktes kann bei dieser Anlage eine zweite Vorrichtung zum Metallabscheiden vor dem Vorratsbehälter 106 entfallen. Von der Waschanlage führt dann die Fördereinrichtung 4a zum Vorratsbehälter 106.

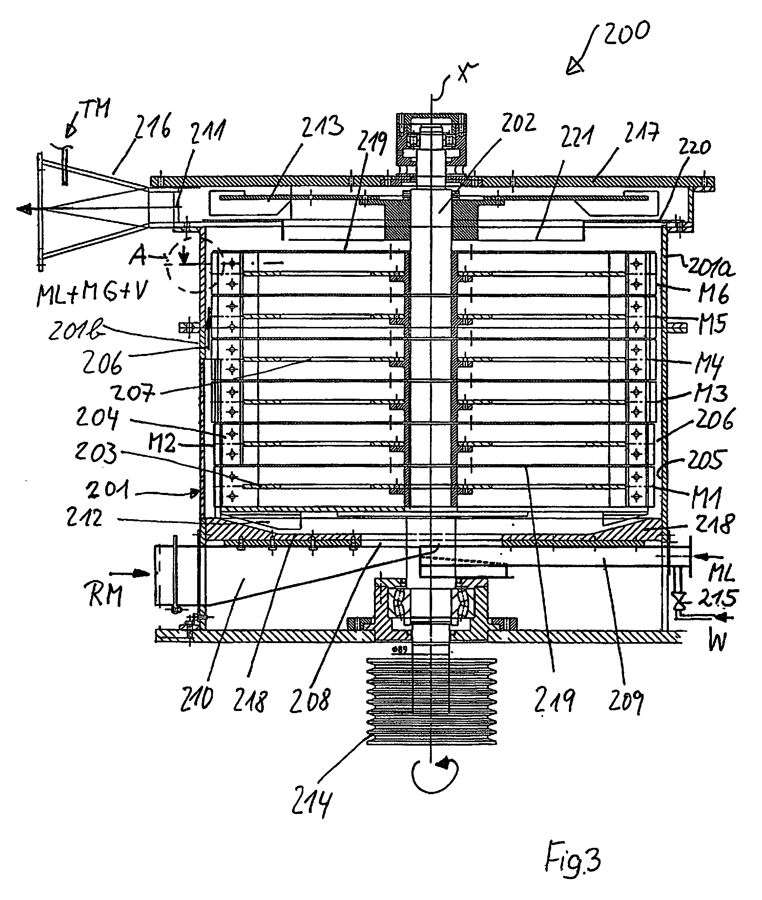

Um einen reibungslosen Dauerbetrieb der Anlagen gemäß Fig. 1 und 2 zu ermöglichen, wird eine Prallwirbelmühle 200 bevorzugt gemäß einer erfindungsgemäßen Bauweise, wie sie schematisiert in der Fig. 3 dargestellt ist, eingesetzt. Ein wesentliches Merkmal der erfindungsgemäßen Prallwirbelmühle - Prallreaktor - 200 ist der Einbau von zwei Ventilatoren, und zwar jeweils im Eingangsbereich und im Ausgangsbereich, mit unterschiedlicher Förderleistung dergestalt, daß der obere Ventilator 213 eine höhere Förderleistung als der untere Ventilator 212 aufweist. Der Prallreaktor 200 weist als Stator eine zweiteilige Trommel 201 mit Oberteil 201a und Unterteil 201b auf, sowie einen Trommelboden 218 und einen Deckel 217. Der Rotor mit Welle 202 ist mit seiner Wellenachse X senkrecht gelagert und wird mittels eines nicht näher dargestellten Antriebes über die Riemenscheibe 214 angetrieben. An dem Rotor sind voneinander beabstandet die sich horizontal erstreckenden Aufnahmeplatten 203 befestigt, die an ihren Enden mit einer Vielzahl von sich vertikal erstreckenden Messern 204 ausgerüstet sind. Die Aufnahmeplatten 203 mit Messern 204 sind jeweils durch Trennplatten 219 voneinander beabstandet, wodurch zwischen den Trennplatten jeweils eine Mahlstufe M1, M2, M3, M4, M5, M6 mit einer Aufnahmeplatte 203 und Messern 204 gebildet ist. Die Aufnahmeplatten 203 weisen des weiteren große Durchbrechungen 207 auf, so daß in jeder Mahlstufe die Mahlluft einschließlich der Teilchen wirbeln kann. Zwischen der Trommelinnenwand 205 und den Messerkanten der Messer 204 verbleibt ein Förderspalt 206, in dem die Mahlluft einschließlich der Teilchen in Pfeilrichtung von unten nach oben von Mahlstufe zu Mahlstufe bis zum Austrag getragen und gesogen werden.

Der von den Mahlstufen M1 bis M6 innerhalb der Trommel 201 gebildete Mahlraum wird nach oben durch einen Zwischendeckel 220 mit zentralem Durchbruch 221 gegenüber dem oberen Deckel 217 der Trommel abgedeckt. In dem zwischen dem oberen Deckel 217 und dem Zwischendeckel 220 gebildeten Raum ist der obere Ventilator 213 angeordnet. Der Zwischendeckel weist eine zentrale Durchtrittsöffnung 221 für die Mahlluft und das Mahlgut auf.

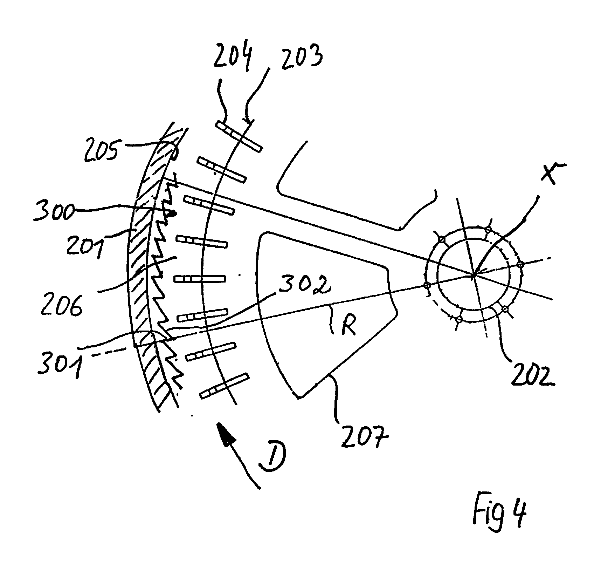

Des weiteren sind auch an der Trommelinnenwand 205, siehe Fig. 4, senkrecht verlaufende rippen- oder sägezahnförmige Profilierungen ausgebildet, die der Ausbildung von Luftwirbeln für die Zerkleinerung des Rohmahlgutes dienen.

Erfindungsgemäß wird eine besonders vorteilhafte Wirbelausbildung für eine wirkungsvolle Zerkleinerung der sich mit der wirbelnden Mahlluft bewegenden Feststoffteilchen dadurch erreicht, daß die Profilierung in Gestalt von Sägezähnen 300 mit zwei Flanken 301, 302 ausgebildet ist, wobei die in Drehrichtung D der Welle 202 erste Flanke 301 jeweils radial auf einem durch die Wellenachse X als Mittelpunkt verlaufenden Radius R verläuft und die zweite Flanke 302 einen spitzen Winkel, beispielsweise etwa 40 bis 50° mit der ersten Flanke 301 an der Sägezahnspitze bildet.

Zentral am Trommelboden 218 wird von einer Seite über den Zufuhrkanal 210 das Rohmahlgut RM zugeführt und über einen weiteren Zufuhrkanal 209 die Mahlluft ML. Zwischen Trommelboden und erster Mahlstufe M1 ist ein Ventilator 212, ausgestattet mit Ventilatorflügeln auf der Welle 202 befestigt und angeordnet. Die Mahlluft ML nimmt das Rohmahlgut RM mit und trägt es über die Öffnungen in die erste Mahlstufe M1 ein. Nach der obersten Mahlstufe M6, die wiederum mittels einer Trennscheibe 219 abgedeckt ist, so daß die Mahlluft und die Feststoffteilchen nur durch den Förderspalt 206 nach oben gelangen können, ist auf der Welle 202 ein weiterer Ventilator 213 befestigt, der mit größeren Flügeln und damit mit einer höheren Förderleistung als der untere Ventilator 212 ausgerüstet ist. Bei gleicher Drehzahl des unteren und oberen Ventilators 212, 213 weist der obere Ventilator mit den größeren Flügeln eine höhere Förderleistung auf, so daß die Mahlluft durch die Mahlstufen und den Förderspalt 206 nach oben gesogen wird und am oberen Rand der Prallwirbelmühle 200 über den radialen Auslaß 211 mit Diffusor 216 austritt. Bei entsprechender schneller Rotation der Welle 202 um die Achse X und entsprechender Rotation der Mahlstufen entstehen durch die Unterteilung in die einzelnen Teilräume mittels der Messer, der Trennscheiben, der Aufnahmescheiben und Durchbrechungen hohe Turbulenzen und Luftwirbel, in denen das mit der Mahlluft ML mitgeführte Rohmahlgut durch Zusammenprallen feinstzerkleinert und die Verbundmaterialien in die einzelnen Materialien aufgetrennt werden. Bei der Feinstzerkleinerung wird auch die Feuchtigkeit durch die Reibungswärme abgetrennt und in Verdampfungsprodukte überführt, des weiteren werden Verbundmaterialien separiert und in einzelne feine Teilchen zerteilt, die alle zusammen mit der Mahlluft ML als Mahlgut MG einschließlich der Verdampfungsprodukte V aus dem Prallreaktor 200 abgeführt werden. An den Diffusor 216 ist die Verbindungsleitung F6 zum Silo angeschlossen, der einen Stauraum für die Mahlluft und das mitgeführte feinstzerteilte Mahlgut bildet und in dem ein höherer Druck als im Prallreaktor 200 aufrechterhalten wird. Auf diese Weise kann der Durchsatz durch den Prallreaktor 200 gesteuert werden, nämlich die Verweilzeit des Rohmahlgutes nach dem Einführen in den Prallreaktor über den Einlaß 208 bis zum Verlassen desselben am Auslaß 201. Je nachdem wie hoch der Druck im Stauraum ist, kann der Sog im Föderspalt 206 des Prallreaktors variiert werden und damit die Geschwindigkeit, mit der die Mahlluft und die Teilchen durch die einzelnen Mahlstufen wirbeln und aus diesen heraus von Mahlstufe zu Mahlstufe durch den Förderspalt 206 langsam nach oben schweben und weitergesogen werden. Überraschend hat sich gezeigt, daß durch den Aufbau eines Gegendruckes, d.h. durch die Anordnung eines Stauraumes nach dem Prallreaktor, über die Verbindungsleitung eine verschleißarme Feinstzerkleinerung und Auftrennung des Rohmahlgut in dem Prallreaktor erfolgt. Es wurde gefunden, daß eine Feinstzerkleinerung praktisch nur durch Zusammenstöße und Verwirbelung der Teilchen des Rohmahlgutes untereinander erfolgt und nur in geringem Ausmaße durch das Zusammenprallen mit den festen Konstruktionsteilen der Prallmühle, d.h. Trommelinnenwand sowie Messer, Aufnahmeplatten usw. Dies wird auch dadurch gefördert, daß durch die beiden fest eingebauten Ventilatoren 212 und 213, wie bereits erläutert, ein Sog ständig von unten nach oben'im Förderspalt 206 vorhanden ist, der wiederum das Anschlagen der zerkleinerten Teilchen an der Trommelinnenwand reduziert und vermeiden hilft. Damit wird es aber möglich, den Prallreaktor über lange Zeiten störungsfrei laufen zu lassen und damit eine hohe Leistung bei der Wiederaufbereitung durch Feinstzerkleinerung und Auftrennung des Rohmahlgutes zu erreichen.

Die Anzahl der Mahlstufen sowie die Anzahl der Messer auf jeder Aufnahmeplatte jeder Mahlstufe richtet sich nach der gewünschten Leistung des Prallreaktors und nach den zu verarbeitenden Produkten. Für die Verarbeitung von Abfallprodukten auf Basis von Kunststoffen und Kunststoffverbundmaterialien, insbesondere auf Basis von thermoplastischen Kunststoffen genügt es, einen Prallreaktor, wie dargestellt mit sechs Mahlstufen bei einem Durchmesser der Aufnahmeplatten bis einem Meter höchstens, einer Höhe einer Mahlstufe von etwa 100 mm vorzusehen, wobei zwischen 40 bis 50 Messer pro Mahlstufe vorgesehen sind. Ein solcher Prallreaktor kann mit einer Tonne Rohmahlgut je Stunde beschickt werden, wobei 42.000 cbm Mahlluft pro Stunde hindurchgeführt werden. Der dem Prallreaktor nachgeordnete Silo sollte dann einen Stauraum von wenigstens 5 cbm aufweisen. Die Temperaturregelung der Mahlluft erfolgt beispielsweise mit einer Temperaturmeßeinrichtung TM mittels Sensor im Bereich des Ausganges aus dem Prallreaktor zum Beispiel am Diffusor 216, siehe Fig. 3. Die Zufuhr von zusätzlichem Wasser W kann beispielsweise über eine Zufuhreinrichtung mit steuerbarem Ventil 215 im Bereich des Zufuhrkanals 209 für die Mahlluft erfolgen. Das Wasser W wird vorzugsweise stoßweise eingespritzt, und zwar in Abhängigkeit von der am Diffusor 216 gemessenen Temperatur der ausströmenden Mahlluft. Insbesondere wird bei der Verarbeitung von Abfallprodukten auf Basis thermoplastischer Kunststoffe die Temperaturregelung so eingestellt, daß bei Überschreiten einer Mahllufttemperatur von 90°C, gemessen mit der Temperaturmeßeinrichtung TM, Wasser über die Einrichtung 215 mit der Mahlluft in den Reaktor eingeführt wird, um die Mahllufttemperatur unterhalb 90°C zu halten. Wenn die Temperatur der Mahlluft am Ausgang des Prallreaktors unterhalb 70°C sinkt, wird die Zugabe von Wasser mit der Einrichtung 215, die intervallweise erfolgt, gänzlich eingestellt. Um nämlich eine Temperatur von nicht über 90°C der Mahlluft am Ausgang des Prallreaktors zu halten, ist es erforderlich, in Intervallen immer wieder Wasser zwecks Verdampfung und damit Entzug von Verdampfungswärme aus der Mahlluft zuzuführen. Die Menge und die Intervalle, in denen Wasser zugeführt werden muß, hängen auch von der mit dem Rohmahlgut RM mitgeschleppten Feuchtigkeit ab. Des weiteren ist dies auch abhängig von der Verweilzeit des Rohmahlgutes im Prallreaktor, die wiederum mittels des Gegendruckes aus dem Stauraum sowie der Förderleistung des oberen Ventilators 213 steuerbar ist. Die Wärme und Erwärmung der Mahlluft ML innerhalb des Reaktors wird ausschließlich durch die Reibungswärme der in den Luftwirbeln aufeinanderprallenden Teilchen des Rohmahlgutes bei der Feinstzerkleinerung erzeugt. Hierbei verdampft auch die Feuchtigkeit innerhalb des Rohmahlgutes und wird zusammen mit der Mahlluft und dem feinstzerkleinerten Teilchen MG als Mahlgut als Verdampfungsprodukt V mit abgeführt.

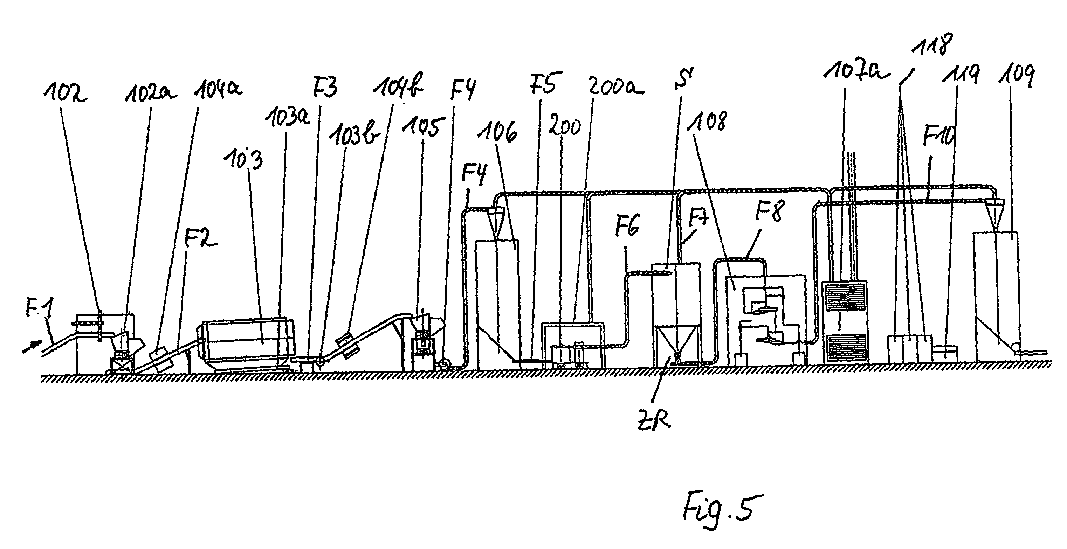

Die in der Fig. 5 schematisch dargestellte Anlage eignet sich beispielsweise für die Verarbeitung von überwiegend Kunststoff enthaltenden Abfällen, wobei diese in einem relativ sauberen Zustand angeliefert werden, beispielsweise Folienabfälle, die trocken verarbeitet werden. Das Abfallmaterial wird beispielsweise in Ballenform, wie in der Fig. 1 dargestellt, auf ein Förderband F1 aufgegeben und einem Ballenauflöser 102 zugeführt, dem ein Grobzerkleinerer 102a, beispielsweise Shredder nachgeordnet ist, indem das Abfallprodukt auf Größen bis 50 mm herunter grob zerkleinert wird. Von hier wird das grobzerkleinerte Material über ein Förderband F2 weitertransportiert und einem Magnetabscheider 104a, beispielsweise ein Magnetband für Eisen - Fe - zum Abscheiden eisenhaltiger Metallteilchen. Danach kommt das grobzerkleinerte Abfallgut in eine Materialvorreinigung, wie Siebtrommel 103, wobei die Fremdkörper, wie Steine, Schwergut, auf der Unterseite über das Austrageband 103a ausgetragen und entfernt werden. Das so vorgereinigte Abfallgut wird dann von der Siebtrommel 103 über ein weiteres Förderband F3 an einer Magnetwalze 103b vorbeigeführt und durchläuft einen Metallabscheider 104b für Nichteisenmetalle. Danach wird das vorher grobzerkleinerte Abfallgut einer weiteren Zerkleinerungsvorrichtung 105 wiederum einem Shredder, der mit Messern ausgerüstet ist, zugeführt und hier auf Teilchen einer Größe kleiner 30 x 30 zerkleinert, wobei auch Fäden kleingehackt werden. Das nunmehr feinzerkleinerte Abfallgut verläßt den Shredder 105 und wird über eine Förderleitung F4, die pneumatisch arbeitet, einem Vorratsbunker 106 zugeführt. Aus dem Vorratsbunker wird das vorrkleinerte Abfallgut über eine Förderstrecke, beispielsweise eine Förderschnecke F5, dem Prallreaktor 200 zugeführt. Der Prallreaktor 200 ist mit einer Schallschutzhaube 200a umgeben.

Das im Prallreaktor feinstzerkleinerte und zerlegte Material wird zusammen mit Abluft und Verdampfungsprodukten über die Förderleitung F6 dem den Stauraum bildenden Silo S zugeführt. Die Verdampfungsprodukte und Abgase verlassen den Silo oben über die Abluftleitung F7 und werden einer Luftwascheinrichtung 107a zugeführt. Die Feststoffteilchen werden aus dem Silo S über die Zellenradschleuse ZR und die pneumatisch arbeitende Förderleitung F8 einer Trockenabscheideeinrichtung zugeführt. Hier werden die feinstzerkleinerten Abfälle von den Leichtstoffteilchen und Zellstoffteilchen befreit, sozusagen entstaubt, und anschließend das so erhaltene gereinigte aufbereitete Kunststoffmaterial in Pulverform oder als Mahlgut über die Förderleitung F10 ausgetragen und einem weiteren Vorratsbehälter 109 zugeführt, von dem der Kunststoff direkt der Weiterverarbeitung, beispielsweise Extrudern, zugeführt werden kann.

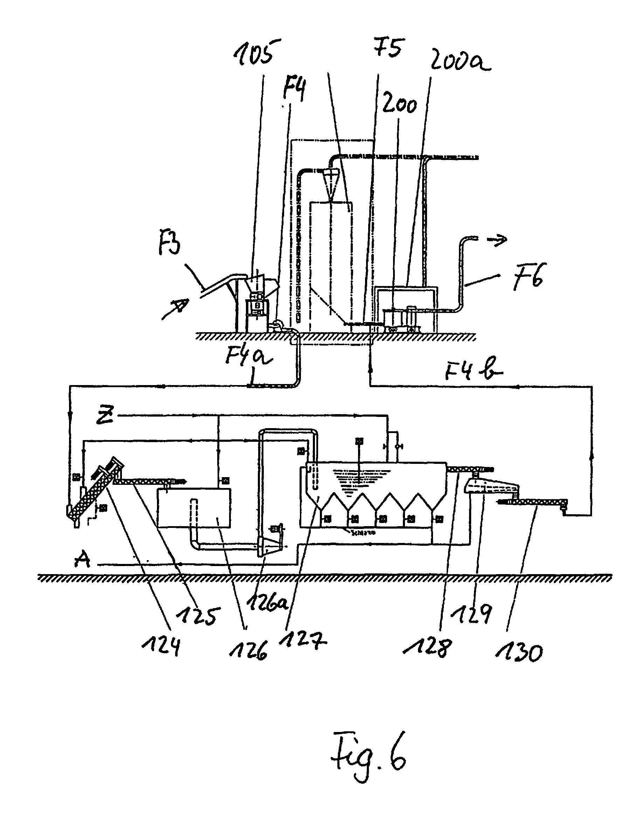

Für den Fall, daß stark verunreinigte Abfälle verarbeitet werden müssen, wird die Anlage gemäß Fig. 5 durch eine zusätzliche Waschanlage ergänzt, siehe Fig. 6, die an Stelle des Vorratsbunkers 106 in die Förderbahn eingefügt wird. Nach dem Shredder wird das zerkleinerte Abfallgut über die Förderleitung F4a einem Doppelfriktionsabscheider 124 mit nachfolgender Förderschnecke 125 zugeführt und gelangt von hier aus in einen Einrührbehälter 126 mit nachfolgendem Turbotrockner 126a. Von hier aus wird das Abfallgut in einen Waschbehälter 127, der mit Wasser angefüllt ist, gebracht, in dem auch Schwergut abgeschieden wird. Danach wird das gewaschene Abfallgut über eine Förderschnecke 128, ein Rüttelsieb zur Abscheidung des Wassers 129 und eine weitere Förderschnecke 130 wieder zur Anlage zurückgeführt über die Förderleitung F4b und dann dem Prallreaktor 200 zur weiteren Feinstzerkleinerung zugeführt. Hierbei handelt es sich um ein relativ nasses im Prallreaktor zu verarbeitendes Abfallgut. Die Versorgung der Waschanlage mit Wasser erfolgt über den Wassereinlauf Z und über den Wasserablauf A.

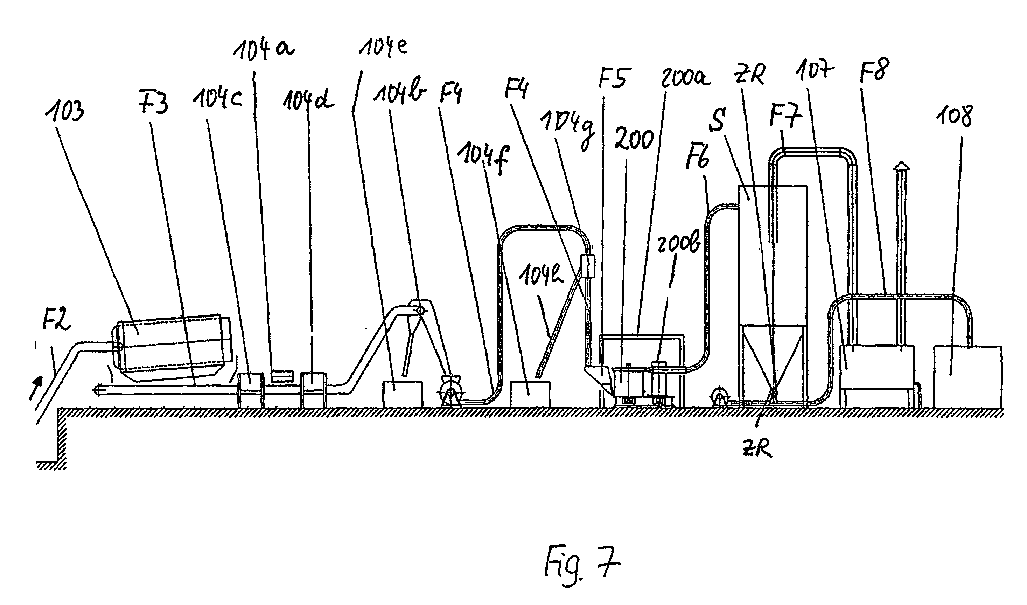

In der Fig. 7 ist schematisch eine Anlage zum Verarbeiten von sogenannten Spuckstoffen, d.h. überwiegend zellulosehaltige Materialien enthaltenden Abfallstoffen aus der Papierindustrie dargestellt. Das Abfallgut, das beispielsweise in Ballen angeliefert und aufgelöst wird, wird dann über eine Förderbahn F2 wiederum einer Siebtrommel 103 zugeführt und von hier ausgetragen und über das Förderband einem Magnetabscheider 104a für Fe mit zwei Egalisiereinrichtungen 104c, 104d zugeführt und anschließend einem weiteren Metallabscheider 104b für Nichteisenmetalle zugeführt, der noch mit einem Aufsammelbehälter 104e bestückt ist. Je nach vorliegender Form des Abfallgutes kann auch noch zwischen den beiden Metallabscheidern 104a und 104b ein weiterer Shredder, beispielsweise Hammermühle oder Schneidwerk, vorgesehen sein. Danach gelangt das zerkleinerte und von Metallteilen gereinigte Abfallgut über die Förderleitung F4 zu einem weiteren Metallabscheider 104g und es werden restliche Metallteile über die Leitung 104h einem Behälter 104f zugeführt und das gereinigte Abfallgut über die Leitung F4 weiter dem Einfülltrichter F5 des Prallreaktors 200 zugeführt. Der Prallreaktor 200 mit Motor 200b ist mit einer Schallschutzhaube 200a umgeben. Das in dem Prallschutzreaktor 200 feinstzerkleinerte und aufgetrennte Abfallgut, nämlich die Spuckstoffe werden über die Förderleitung F6 mit den Verdampfungsprodukten und der Abluft in den Silo S eingebracht. Die Abluft und Verdampfungsprodukte werden über die Abluftleitung F7 aus dem Silo abgezogen und einer Luftabscheidung mit Kondensator zugeführt, 107. Die Feststoffteilchen werden in dem Silo S nach unten durch eine Zellenradschleuse ZR über die Förderleitung F8 ausgetragen und einem Vorratsbehälter zugeführt. Bei der Verarbeitung von Spuckstoffen erhält man hier getrocknete Zellulose, die nachfolgend von weiteren Feststoffteilchen, wie beispielsweise Kunststoffteilchen, in einer Trockenabscheidevorrichtung befreit werden kann.

Bei dem erfindungsgemäßen Verfahren zum Verarbeiten von Abfallstoffen, insbesondere kunststoffhaltigen, Leichtstoffteilchen und zellulosehaltigen Abfallstoffen, wird eine erste Trennung im Prallreaktor durchgeführt, nämlich die Auftrennung der Laminate in Kunststoffe, Zellulose und Wasserdampf. Danach folgt eine zweite Trennung im Silo, nämlich Abscheiden des Wasserdampfes und der Verdampfungsprodukte, dabei Trocknung der Produkte und Erhalten von trocknen Feststoffteilchen, nämlich Kunststoffteilchen und Zellulose und Leichtstoffteilchen.

Danach schließt sich eine weitere Trennung an, indem nämlich die trockenen Feststoffteilchen in Schwer- und Leichtteilchen getrennt werden, nämlich einerseits Kunststoffteilchen, andererseits Zellulose- und Leichtstoffteilchen.

## Patentansprüche

1. Verfahren zum Aufbereiten von Abfallprodukten auf Basis von Kunststoffen, Kunststoffverbundmaterialien, Spuckstoffen, enthaltend Kunststoffe, Zellulose, Leichtstoffe wie Papier, Pappe, Leichtschaumstoffe sowie Metallabfälle und Schmutzpartikel sowie Feuchte, zwecks Wiedergewinnung von wiederverwertbaren und verarbeitbaren Materialien, insbesondere Kunststoff und gegebenenfalls Zellulose, bei dem die Abfallprodukte durch Entfernen der Metallabfälle und Schmutzteilchen gereinigt und zu einem groben Rohmahlgut vorzerkleinert werden und das Rohmahlgut zu einem schüttfähigen Abfallgut feinstzerkleinert und getrocknet wird, wobei die Feinstzerkleinerung bei gleichzeitiger Auftrennung der Verbundmaterialien in einer Prallwirbelmühle (200) mit Mahlluft unter Erzeugung energiereicher Turbulenzwirbel erfolgt, wobei Reibungswärme entsteht und die mit dem Rohmahlgut eingeführte Feuchte in Verdampfungsprodukte überführt wird und die Mahlluft (ML) und das Rohmahlgut (RM) über einen Einlaß (209, 210) und einen Ventilator (212) in einen Mahlraum eingeführt und durch einen Auslaß (211) aus dem Mahlraum die Mahlluft, das feinstzerteilte Abfallgut und die Verdampfungsprodukte abgeführt werden, wobei die Mahlluft im Inneren des Mahlraumes in Richtung des Auslasses (211) abgesaugt wird und die Mahlluft (ML) zusammen mit den Verdampfungsprodukten (V) und dem in die einzelnen Materialien aufgetrennten und feinstzerkleinerten Abfallgut (MG) aus dem Mahlraum in einen Stauraum (S) überführt werden,
**dadurch gekennzeichnet, daß** ein Sog in Richtung Auslaß (211) mittels eines zwischen dem Mahlraum der Prallwirbelmühle (200) und dem Auslaß (211) angeordneten Ventilators (213) mit einer größeren Förderleistung als derjenigen des Ventilators (212) im Einlaßbereich erzeugt wird, wobei in dem Stauraum (S) ein über dem innerhalb des Mahlraumes liegender Druck erzeugbar ist, und die Verdampfungsprodukte zusammen mit der Mahlluft aus dem Stauraum nach oben abgeführt werden und das feinstzerkleinerte Abfallgut in dem Stauraum unter Einwirkung der Schwerkraft nach unten fällt und von den Verdampfungsprodukten befreit in trockenem Zustand aus dem Stauraum ausgetragen wird.

2. Verfahren nach Anspruch 1,
**dadurch gekennzeichnet, daß** das aus dem Stauraum (S) ausgetragene trockene und feinstzerkleinerte Abfallgut nachfolgend einer Trockenabscheidung (108) zum Abtrennen und Ausscheiden der Zelluloseteilchen und sonstigen Leichtstoffteilchen aus dem Abfallgut unterworfen wird, wobei Zellulose- und Leichtstoffteilchen aus dem Abfallgut abgesaugt werden, und als Restgut ein trockenes und schüttfähiges Kunststoffpulver bzw. Kunststoffmahlgut als wiederaufbereitetes Produkt für erneute stoffliche Verwertung und Verarbeitung erhalten wird.

3. Verfahren nach einem der Ansprüche 1 bis 2,
**dadurch gekennzeichnet, daß** der als Restgut erhaltene wiederaufbereitete Kunststoff eine Restfeuchte von weniger als 0,5 Gew.-% enthält, bezogen auf das Gewicht des Kunststoffs.

4. Verfahren nach einem der Ansprüche 1 bis 3,
**dadurch gekennzeichnet, daß** die Temperatur (TM) der den Mahlraum in Richtung Stauraum (S) verlassenden Mahlluft (ML) gemessen wird und in Abhängigkeit von der hier gemessenen Temperatur der Mahlluft zusätzliches Wasser (W) in den Mahlraum zwecks Verdampfung zur Erniedrigung der Temperatur der Mahlluft eingeführt wird.

5. Verfahren nach Anspruch 4,
**dadurch gekennzeichnet, daß** die Mahllufttemperatur (TM) am Meßpunkt in einem Bereich von 8 bis 30°C unterhalb der Siedetemperatur von Wasser bei Atmosphärendruck gehalten wird, indem das zusätzliche Wasser diskontinuierlich in Intervallen in den Mahlraum eingebracht wird.

6. Verfahren nach einem der Ansprüche 1 bis 5,
**dadurch gekennzeichneb,** daß im Stauraum (S) ein um mindestens 1 bar höherer Druck, in bezug auf den innerhalb des Mahlraums herrschenden Druck, aufrechterhalten wird.

7. Verfahren nach einem der Ansprüche 1 bis 6,
**dadurch gekennzeichnet, daß** die Verweilzeit des Rohmahlgutes (RM) in dem Mahlraum in Abhängigkeit von dem Druck in dem Stauraum (S) zu dem Druck in dem Mahlraum eingestellt wird, dergestalt, daß bei vorgegebenem Druck in dem Mahlraum bei Erhöhung des Druckes in dem Stauraum die Verweilzeit des Rohlmahlgutes verlängert bzw. bei Erniedrigung des Druckes die Verweilzeit des Rohmahlgutes in dem Mahlraum verkürzt wird.

8. Anlage zur Durchführung des Verfahrens nach einem der Ansprüche 1 bis 7, umfassend mindestens eine erste Vorrichtung (105) zum Vorzerkleinern der Abfallprodukte zu einem Rohmahlgut sowie gegebenenfalls Einrichtungen (103, 104a, 104b) zum Reinigen und Abscheiden und Trennen für die in den Abfallprodukten außer Kunststoffen enthaltenen hiervon verschiedenen Materialien, und eine Vorrichtung zum Feinstzerkleinern des Rohmahlgutes in Gestalt einer Prallwirbelmühle (200) mit einem Mahlraum mit einem Einlaß (109, 110) für Mahlluft (ML) und Rohmahlgut (RM) und einem Auslaß (211) für Mahlluft und feinstzerkleinertes Abfallgut, wobei zwischen dem Einlaßbereich und dem Mahlraum ein Ventilator (212) angeordnet ist und der Prallwirbelmühle (200) ein Stauraum (S) nachgeordnet ist und der Auslaß (211) der Prallwirbelmühle mit dem Stauraum (S) verbunden ist,
**dadurch gekennzeichnet, daß** zwischen Mahlraum und Auslaßbereich (211) ein weiterer Ventilator (213) angeordnet ist, wobei die Förderleistung des Ventilators im Ausgangsbereich größer ist als diejenige des Ventilators im Einlaßbereich, so daß ein Sog in Richtung Auslaßbereich in dem Mahlraum erzeugbar ist und in dem Stauraum (S) ein über dem innerhalb des Mahlraumes der Prallwirbelmühle (200) liegender Druck erzeugbar ist und der Stauraum (S) im oberen Bereich eine Abzugsleitung (F7) für Mahlluft und Verdampfungsprodukte aufweist und der Stauraum (S) im unteren Bereich mit einer Zellenradschleuse (ZR) für den Austrag des feinstzerteilten und in die Materialien aufgetrennten Abfallgutes in Gestalt von Feststoffteilchen ausgestattet ist.

9. Anlage nach Anspruch 8,
**dadurch gekennzeichnet, daß** der Druck im Stauraum (S) mittels der Förderleistung der Zellenradschleuse (ZR) und/oder der Veränderung der Abzugsleistung für die Mahlluft und Verdampfungsprodukte über die Abzugsleitung (F7) aus dem Stauraum (S) regelbar ist.

10. Anlage nach einem der Ansprüche 8 oder 9,
**dadurch gekennzeichnet, daß** eine Temperaturmeßeinrichtung (TM) für das Messen der Temperatur der aus der Prallwirbelmühle (200) austretenden und in den Stauraum (S) über eine Verbindungsleitung (F6) eintretenden Mahlluft (ML) in der Verbindungsleitung vorgesehen ist.

11. Anlage nach einem der Ansprüche 8 bis 10,
**dadurch gekennzeichnet, daß** eine Einrichtung (215) zum Einspritzen von Wasser (W) in den Mahlraum vorgesehen ist und das mittels der Einrichtung zum Einspritzen von Wasser in den Mahlraum einzuführende Wasser in der Quantität und zeitabhängig in Abhängigkeit von der mittels der Temperaturmeßeinrichtung (TM) gemessenen Temperatur der Mahlluft am Ausgang (211) der Prallwirbelmühle (200) steuerbar ist.

12. Anlage nach einem der Ansprüche 8 bis 11,
**dadurch gekennzeichnet, daß** eine mittels Unterdruck arbeitende Trockenabscheidevorrichtung (108) vorgesehen ist, die über eine pneumatische Materialförderleitung (F8) mit der Zellenradschleuse (ZR) des Stauraumes (S) verbunden ist, in der aus dem von der Zellenradschleuse herbeigeführten feinstzerteilten und trockenen Abfallgut die Zelluloseteilchen und Leichtstoffteilchen durch Absaugen in trockener Form abgetrennt und abgeführt werden, und als Restgut gereinigtes wiederaufbereitetes Kunststoffpulver bzw. -mahlgut erhalten wird.

13. Anlage nach einem der Ansprüche 8 bis 12,
**dadurch gekennzeichnet, daß** als Stauraum (S) ein Silo vorgesehen ist, der über eine Verbindungsleitung (F6) mit dem Auslaß (211) der Prallwirbelmühle (200) verbunden ist und wobei aus dem oberen Bereich des Silos eine Abzugsleitung (F7) für Mahlluft und Verdampfungsprodukte herausgeführt ist und an einen Filter (107) und ggf. einen Kondensator angeschlossen ist.

14. Anlage nach einem der Ansprüche 8 bis 13,
**dadurch gekennzeichnet, daß** als Prallwirbelmühle (200) ein Prallreaktor mit einem Mahlraum und mehreren Mahlstufen (M1-M6) eingesetzt ist, die eine allen Mahlstufen gemeinsame Trommel (201) als Stator mit einer mit mehreren übereinander angeordneten Mahlstufen (M1-M6) ausgerüsteten Welle (202) umfaßt, wobei jede Mahlstufe von einer an der Welle befestigten Durchbrechungen aufweisenden Aufnahmeplatte (203) mit einer Vielzahl von am Umfang befestigten Messern (204) gebildet ist und zwischen der Trommelinnenwand (205) und den Messern (204) ein Förderspalt (206) für das Rohmahlgut von Mahlstufe zu Mahlstufe gebildet ist und die Wellenachse (X) der Welle (202) in senkrechter Lage angeordnet ist und ein Einlaß (209) mit einem Zufuhrkanal für Mahlluft (ML) und einem Zufuhrkanal (210) für das Rohmahlgut (RM) verbunden ist und ein Auslaß (211) nahe der Oberseite der Trommel (201) radial austretend ausgebildet ist und zwischen Einlaß (209, 210) und erster Mahlstufe (M1) ein unterer Ventilator (212) und oberhalb der letzten Mahlstufe (M6) ein oberer Ventilator (213) jeweils auf der Welle (202) des Rotors angeordnet und befestigt ist, wobei als oberer Ventilator (213) ein Ventilator mit einer um mindestens 10 % höheren Förderleistung als der Förderleistung des unteren Ventilators (212) vorgesehen ist.

15. Anlage nach Anspruch 14,
**dadurch gekennzeichnet, daß** an der Trommelinnenseite (205) eine Profilierung in Form von senkrecht und parallel zur Wellenachse (X) verlaufenden Sägezähnen (300) mit Flanken (301, 302) vorgesehen ist, wobei die in Drehrichtung der Welle (202) erste Flanke (301) eines Sägezahnes (300) entlang des zur Wellenachse (X) als Mittelpunkt verlaufenden Radius verlaufend ausgebildet ist und die zweite Flanke (302) mit der ersten Flanke (301) eine Sägezahnspitze bildet.

16. Anlage nach einem der Ansprüche 11 bis 15,
**dadurch gekennzeichnet, daß** die Einrichtung (215) für die Zufuhr von Wasser (W) an den Zuführungskanal (209) für die Mahlluft (ML) angeschlossen ist.

17. Anlage nach einem der Ansprüche 8 bis 16,
**dadurch gekennzeichnet, daß** für die Verarbeitung von Abfallprodukten eine Materialaufgabevorrichtung (101) für die in kompaktierter Form, wie Ballen (B), angelieferten Abfallprodukte vorgesehen ist, die mittels einer Fördereinrichtung (F1) für die Ballen (B) mit einer Einrichtung (102) zum Auflösen der Ballen verbunden ist, und eine Fördereinrichtung (F2, F3) für den Transport der aus den Ballen vereinzelten Abfallprodukte von der Einrichtung (102) zum Auflösen der Ballen mit einer Einrichtung (105) zum Vorzerkleinern der Abfallprodukte verbindet, und eine weitere Fördereinrichtung (F4) für die vorzerkleinerten Abfallprodukte vorgesehen ist, die die Vorzerkleinerungseinrichtung (105) mit einem Vorratsbehälter (106) verbindet, wobei den Einrichtungen (105) zum Vorzerkleinern im Bereich der Fördereinrichtungen (F2, F3) Metallabscheidevorrichtungen (104a, 104b) zum Abscheiden von FE- bzw. NE-Metallabfällen aus den Abfallprodukten zugeordnet ist, daß eine Prallwirbelmühle (200) vorgesehen ist, die mittels einer kontinuierlich fördernden Fördereinrichtung (F5), wie einer Föderschnecke, mit dem Vorratsbehälter (106) für die zu einem Rohmahlgut vorzerkleinerten Abfallprodukte verbunden ist, daß ein Silo (S) vorgesehen ist, der einen Stauraum bildet und in dessen unterem Bereich eine Zellenradschleuse (ZR) angeordnet ist, und der Silo (S) mit dem Auslaß (211) der Prallwirbelmühle (200) über eine Verbindungsleitung (F6) verbunden ist, die im oberen Bereich des Silos (S) eingeführt ist und der Silo im oberen Bereich des weiteren eine Abzugsleitung (F7) aufweist, die mit einem Filter (107) und ggf. Kondensator verbunden ist, für den Abzug von Mahlluft einschließlich Verdampfungsprodukten, und dem Silo (S) eine Trockenabscheidevorrichtung (108) nachgeordnet ist, wobei eine pneumatische Förderleitung (F8) von der Zellenradschleuse (ZR) des Silos (S) zu der Trockenabscheidevorrichtung (108) vorgesehen ist, und die Trockenabscheidevorrichtung (108) mit einer Absaugleitung (F9) für Zellulose- und Leichtstoffteilchen versehen ist sowie eine pneumatische Förderleitung (F10) für den Austrag des Restgutes in Gestalt von wiederaufbereitetem Kunststoff aus der Trockenabscheidevorrichtung ausgestattet ist, die zu einem Vorratsbehälter (109) geführt ist.

18. Anlage nach Anspruch 17,
**dadurch gekennzeichnet, daß** für die Verarbeitung von verschmutzten und nassen Abfallprodukten zwischen der Einrichtung (105) zum Vorzerkleinern und dem Vorrätsbehälter (106) für das Rohmahlgut eine Waschanlage (127) mit einer Schwergutaustragsfördereinrichtung angeordnet ist, die über Fördereinrichtungen (F4a, F4b) mit der Einrichtung zum Vorzerkleinern (105) bzw. dem Vorratsbehälter (106) verbunden ist.

## Claims

1. A method for treating plastic-based waste products, composite plastic materials, rejects containing plastic, cellulose, light-weight materials such as paper, cardboard, light-weight cellular materials, waste metal and dirt particles, as well as moisture, in order to recover materials that can be recycled and processed, in particular, plastic and, if applicable, cellulose, wherein the waste products are cleaned by removing the waste metal and dirt particles and then pre-comminuted into a coarsely ground raw material, wherein the coarsely ground raw material is finely comminuted into a pourable waste product and dried, wherein the fine comminution takes place while simultaneously separating the composite materials in an impact turbulence mill (200) in which high-energy turbulences are generated by means of grinding air, wherein frictional heat is generated and the moisture introduced together with the ground raw material is transformed into evaporation products, wherein the grinding air (ML) and the ground raw material (RM) are introduced into a grinding chamber through an inlet (209, 210) with the aid of a fan (212) and the grinding air, the finely comminuted waste product and the evaporation products are transported out of the grinding chamber through an outlet (211), wherein the grinding air in the interior of the grinding chamber is removed by suction in the direction of the outlet (211), and wherein the grinding air (ML) is transferred from the grinding chamber into a retaining chamber (S) together with the evaporation products (V) and the finely comminuted waste product (MG) that is separated into the individual materials, **characterized by** the fact that suction is generated in the direction of the outlet (211) by means of a fan (213) that is arranged between the grinding chamber of the impact turbulence mill (200) and the outlet (211) and has a higher output than the fan (212) in the inlet region, wherein a pressure that lies above the pressure within the grinding chamber can be generated in the retaining chamber (S), wherein the evaporation products are upwardly discharged from the retaining chamber together with the grinding air, and wherein the finely comminuted waste product precipitates in the retaining chamber under the influence of the gravitational force and is removed from the retaining chamber in the dry state in which it does not contain evaporation products.

2. The method according to Claim 1, **characterized by** the fact that the dry and finely comminuted waste product is, after being removed from the retaining chamber (S), subjected to a dry separation (108) in order to separate and remove the cellulose particles and other light-weight material particles from the waste product, wherein the cellulose particles and light-weight material particles are removed from the waste product by means of suction, and wherein a residual product in the form of a dry and pourable plastic power or ground plastic material that can be recycled and processed is obtained.

3. The method according to Claim 1 or 2, **characterized by** the fact that the reconditioned plastic obtained as the residual product has a residual moisture of less than 0.5 wt.% referred to the weight of the plastic.

4. The method according to one of Claims 1 - 3, **characterized by** the fact that the temperature (TM) of the grinding air (ML) being discharged from the grinding chamber in the direction of the retaining chamber (S) is measured, and by the fact that additional water (W) is introduced into the grinding chamber depending on the measured temperature of the grinding air in order to evaporate the water and to thusly lower the temperature of the grinding air.

5. The method according to Claim 4, **characterized by** the fact that the grinding air temperature (TM) at the measuring point is maintained between 8 and 30 °C below the boiling temperature of water at atmospheric pressure by discontinuously introducing the additional water into the grinding chamber in certain intervals.

6. The method according to one of Claims 1 - 5, **characterized by** the fact that the pressure in the retaining chamber (S) is maintained at least 1 bar higher than the pressure in the grinding chamber.

7. The method according to one of Claims 1 - 6, **characterized by** the fact that the dwell time of the ground raw material (RM) in the grinding chamber is adjusted depending on the ratio between the pressure in the retaining chamber (S) and the pressure in the grinding chamber, namely in such a way that the dwell time of the ground raw material is extended at a predetermined pressure in the grinding chamber by increasing the pressure in the retaining chamber or that the dwell time of the ground raw material in the grinding chamber is shortened by lowering the pressure.

8. A system for carrying out the method according to one of Claims 1 - 7, comprising at least a first device (105) for pre-comminuting the waste products into a coarsely ground raw material and, if applicable, devices (103, 104a, 104b) for cleaning, separating and removing materials other than plastics which are contained in the waste products, and a device for finely comminuting the ground raw material which is realized in the form of an impact turbulence mill (200) and contains a grinding chamber with an inlet (109, 110) for grinding air (ML) and the ground raw material (RM), as well as an outlet (211) for the grinding air and the finely comminuted waste product, wherein a fan (212) is arranged between the inlet region and the grinding chamber, wherein a retaining chamber (S) is arranged downstream of the impact turbulence mill (200), and wherein the outlet (211) of the impact turbulence mill is connected to the retaining chamber (S), **characterized by** the fact that an additional fan (213) is arranged between the grinding chamber and the outlet region (211), wherein the output of the fan in the outlet region is higher than that of the fan in the inlet region such that suction in the direction of the outlet region can be generated in the grinding chamber, by the fact that a pressure which is higher than the pressure within the grinding chamber of the impact turbulence mill (200) can be generated in the retaining chamber (S), by the fact that the upper region of the retaining chamber (S) contains an exhaust line (F7) for grinding air and evaporation products, and by the fact the lower region of the retaining chamber (S) is equipped with a cellular wheel sluice (ZR) for transporting away the finely comminuted waste product that is separated into the respective materials and present in the form of solid particles.

9. The system according to Claim 8, **characterized by** the fact that the pressure in the retaining chamber (S) can be regulated by means of the output of the cellular wheel sluice (ZR) and/or by changing the volumetric capacity of the grinding air and the evaporation products in the exhaust line (F7) leading out of the retaining chamber (S).

10. The system according to Claim 8 or 9, **characterized by** the fact that a temperature measuring device (TM) is provided for measuring the temperature of the grinding air (ML) that emerges from the impact turbulence mill (200) and is introduced into the retaining chamber (S) via a connecting line (F6), wherein the temperature measuring device is arranged in the connecting line.

11. The system according to one of Claims 8 - 10, **characterized by** the fact that a device (215) is provided for injecting water (W) into the grinding chamber, and by the fact that the quantity and the times at which water is injected into the grinding chamber can be controlled by means of the water injecting device depending on the temperature of the grinding air measured at the outlet (211) of the impact turbulence mill (200) by means of the temperature measuring device (TM).

12. The system according to one of Claims 8 - 11, **characterized by** the fact that a vacuum-operated dry separating device (108) is provided which is connected to the cellular wheel sluice (ZR) of the retaining chamber (S) via a pneumatic material transport line (F8), wherein cellulose particles and light-weight material particles are removed from the finely comminuted and dry waste product received from the cellular wheel sluice in dry form by means of suction and transported away, and wherein cleaned, reconditioned plastic powder or ground plastic material is obtained as the residual product.

13. The system according to one of Claims 8 - 12, **characterized by** the fact that the retaining chamber (S) consists of a silo that is connected to the outlet (211) of the impact turbulence mill (200) via a connecting line (F6), wherein an exhaust line (F7) for grinding air and evaporation products which leads out of the upper region of the silo is connected to a filter (107) and, if applicable, a condenser.

14. The system according to one of Claims 8 - 13, **characterized by** the fact that an impact reactor with a grinding chamber and several grinding stages (M1 - M6) is used as the impact turbulence mill (200), wherein the impact reactor comprises a stator that is realized in the form of a common drum (201) for all grinding stages and a shaft (202) equipped with several grinding stages (M1 - M6) that lie on top of one another, wherein each grinding stage is formed by a receptacle plate (203) with openings which is fixed on the shaft and contains a series of blades (204) that are fixed on its circumference, wherein a transport gap (206) for transporting the raw material from grinding stage to grinding stage is formed between the inner wall (205) of the drum and the blades (204), wherein the shaft axis (X) of the shaft (202) is arranged vertically and an inlet (209) is connected to a feed channel for grinding air (ML) and a feed channel (210) for the raw material (RM), wherein a radial outlet (211) is arranged near the upper side of the drum (201), wherein a lower fan (212) is arranged and fixed on the shaft (202) of the rotor between the inlet (209, 210) and the first grinding stage (M1) and an upper fan (213) is arranged and fixed on the shaft of the rotor above the last grinding stage (M6), and wherein the upper fan (213) has an output that is at least 10 % higher than the output of the lower fan (212).

15. The system according to Claim 14, **characterized by** the fact that the inner side (205) of the drum is provided with a sawtooth profiling (300) with flanks (301, 302), wherein said teeth extend perpendicular and parallel to the shaft axis (X), wherein the first flank (301) of a sawtooth (300) is, viewed in the rotating direction of the shaft (202), realized such that it extends along the radius for which the shaft axis (X) serves as the center point, and wherein the second flank (302) forms a sawtooth point together with the first flank (301).

16. The system according to one of Claims 11 - 15, **characterized by** the fact that the device (215) for supplying water (W) is connected to the feed channel (209) for the grinding air (ML).

17. The system according to one of Claims 8 - 16, **characterized by** the fact that a material delivery device (101) for waste products delivered in compacted form, e.g., bales (B), is provided for processing the waste products and connected to a device (102) for loosening the bales by means of a transport device (F1) for the bales (B), by the fact that a transport device (F2, F3) for transporting the separated waste products of the bales connects the device (102) for loosening the bales to a device (105) for pre-comminuting the waste products, by the fact that one additional transport device (F4) is provided for the pre-comminuted waste products which connects the pre-comminuting device (105) to a reservoir (106), wherein metal separating devices (104a, 104b) for a separating FE and NE waste metal from the waste products is assigned to the pre-comminuting devices (105) in the region of the transport devices (F2, F3), by the fact that an impact turbulence mill (200) is provided which is connected to the reservoir (106) for the waste products that are pre-comminuted into a ground raw material by means of a continuously operating transport device (F5), e.g., a transport screw, by the fact that a silo (S) is provided which forms a retaining chamber and in the lower region of which a cellular wheel sluice (ZR) is arranged, by the fact that the silo (S) is connected to the outlet (211) of the impact turbulence mill (200) via a connecting line (F6) arranged in the upper region of the silo (S), by the fact that the upper region of the silo additionally contains an exhaust line (F7) for the grinding air and evaporation products which is connected to a filter (107) and, if applicable, a condenser, and by the fact that a dry separating device (108) is arranged downstream of the silo (S), wherein a pneumatic transport line (F8) is provided between the cellular wheel sluice (ZR) of the silo (S) and the dry separating device (108), and wherein the dry separating device (108) is provided with a suction line (F9) for cellulose particles and light-weight material particles, as well as with a pneumatic transport line (F10) that serves for transporting the residual material in the form of reconditioned plastic out of the dry separating device and leads to a reservoir (109).

18. The system according to Claim 17, **characterized by** the fact that a washing system (127) with a device for transporting away heavy materials is arranged between the pre-comminuting device (105) and the reservoir (106) for the ground raw material in order to process soiled and wet waste products, wherein said washing system is connected to the pre-comminuting device (105) and to the reservoir (106) by means of transport devices (F4a, F4b).

## Revendications

1. Procédé pour traiter des déchets à base de matières plastiques, de matériaux composites en matière plastique, de détritus, contenant des plastiques, de la cellulose, des matières légères telles que du papier, du carton, des mousses légères ainsi que des déchets de métaux et des particules de poussière, ainsi que de l'humidité, pour le recyclage de matériaux pouvant être réutilisés et traités en particulier du plastique et éventuellement de la cellulose, avec lequel les déchets sont nettoyés par enlèvement des déchets de métaux et des particules de poussière et prébroyés en une matière broyée brute grossière et la matière broyée brute est broyée très finement et séchée pour devenir un déchet déversable, le broyage très fin s'effectuant avec une séparation simultanée des matériaux composites dans un moulin tourbillonnaire à percussion (200) avec de l'air de broyage en générant des turbulences riches en énergie, moyennant quoi il se forme de la chaleur de frottement et l'humidité introduite avec la matière broyée brute est transformée en produits d'évaporation et l'air de broyage (ML) et la matière broyée brute (RM) sont introduits par une entrée (209, 210) et un ventilateur (212) dans un espace de broyage et l'air de broyage, le déchet très finement broyé et les produits d'évaporation sont évacués de l'espace de broyage par une sortie (211), l'air de broyage étant aspiré à l'intérieur de l'espace de broyage en direction de la sortie (211) et l'air de broyage (ML) étant transporté en même temps que les produits d'évaporation (V) et les déchets (MG) séparés en différents matériaux et très finement broyés en dehors de l'espace de broyage dans un espace de retenue (S), **caractérisé en ce qu'**un remous est généré en direction de la sortie (211) au moyen d'un ventilateur (213) disposé entre l'espace de broyage du moulin tourbillonnaire à percussion (200) et la sortie (211) avec un débit supérieur à celui du ventilateur (212) dans la zone d'entrée, moyennant quoi on peut générer dans l'espace de retenue (S) une pression supérieure à celle régnant à l'intérieur de l'espace de broyage, et les produits d'évaporation sont évacués en même temps que l'air de broyage hors de l'espace de retenue vers le haut et les déchets très finement broyés tombent vers le bas dans l'espace de retenue sous l'effet de la pesanteur et sont transportés hors de l'espace de retenue à l'état sec et débarrassés des produits d'évaporation.

2. Procédé selon la revendication 1, **caractérisé en ce que** le déchet sec et très finement broyé, sorti de l'espace de retenue (S) est soumis successivement à une séparation à sec (108) pour la séparation et la dissociation des particules de cellulose et d'autres particules légères du déchet, les particules de cellulose et de matière légère étant sorties du déchet par aspiration et une poudre de plastique ou matière broyée de plastique, sèche et déversable, étant obtenue comme matière résiduelle et comme produit retraité pour une nouvelle utilisation au niveau des produits et un nouveau traitement.

3. Procédé selon l'une quelconque des revendications 1 à 2, **caractérisé en ce que** le pastique retraité obtenu comme matière résiduelle contient une humidité résiduelle inférieure à 0,5 % de poids, par rapport au poids du plastique.

4. Procédé selon l'une quelconque des revendications 1 à 3, **caractérisé en ce que** la température (TM) de l'air de broyage (ML) quittant l'espace de broyage en direction de l'espace de retenue (S) est mesurée et de l'eau supplémentaire (W) est introduit dans l'espace de broyage pour l'évaporation pour l'abaissement de la température de l'air de broyage en fonction de la température de l'air de broyage qui est mesurée ici.

5. Procédé selon la revendication 4, **caractérisé en ce que** la température de l'air de broyage (TM) est maintenue au point de mesure dans une plage de 8 à 30 °C au-dessous de la température d'ébullition de l'eau à la pression atmosphérique, par le fait que l'eau supplémentaire est introduite de façon discontinue et par intervalles dans l'espace de broyage.

6. Procédé selon l'une quelconque des revendications 1 à 5, **caractérisé en ce qu'**une pression supérieure d'au moins 1 bar, par rapport à la pression régnant à l'intérieur de l'espace de broyage, est maintenue dans l'espace de retenue (S).

7. Procédé selon l'une quelconque des revendications 1 à 6, **caractérisé en ce que** le temps de séjour de la matière broyée brute (RM) dans l'espace de broyage est réglé en fonction de la pression dans l'espace de retenue (S) par rapport à la pression dans l'espace de broyage de telle sorte que, pour une pression prédéfinie dans l'espace de broyage, le temps de séjour de la matière broyée brute est allongé en cas d'élévation de la pression dans l'espace de retenue et est réduit en cas d'abaissement de cette pression.

8. Installation pour l'application du procédé selon l'une quelconque des revendications 1 à 7, comprenant au moins un premier dispositif (105) pour le prébroyage des déchets en une matière broyée brute et éventuellement des appareils (103, 104a, 104b) pour le nettoyage et la dissociation et la séparation pour les matériaux différents et inclus dans les déchets en dehors des plastiques, et un dispositif pour le broyage très fin de la matière broyée brute sous la forme d'un moulin tourbillonnaire à percussion (200) avec un espace de broyage avec une entrée (109, 110) pour l'air de broyage (ML) et la matière broyée brute (RM) et une sortie (211) pour l'air de broyage et des déchets très finement broyés, moyennant quoi un ventilateur (212) est disposé entre la zone d'entre et l'espace de broyage, un espace de retenue (S) est disposé après le moulin tourbillonnaire à percussion (200) et la sortie (211) du moulin tourbillonnaire à percussion est relié à l'espace de retenue (S), **caractérisée en ce qu'**un autre ventilateur (213) est disposé entre l'espace de broyage et la zone de sortie (211), le débit du ventilateur dans la zone de sortie étant supérieur au débit du ventilateur dans la zone d'entrée, de sorte qu'on peut générer un remous en direction de la zone d'entrée dans l'espace de broyage, qu'on peut générer dans l'espace de retenue (S) une pression supérieure à la pression à l'intérieur de l'espace de broyage du moulin tourbillonnaire à percussion (200) et que l'espace de retenue (S) présente dans la zone supérieure une conduite d'évacuation (F7) pour l'air de broyage et les produits d'évaporation et l'espace de retenue (S) dans la zone inférieure est équipé d'un sas à roue solaire (ZR) pour la sortie des déchets très finement broyés et séparés en matériaux sous la forme de particules solides.

9. Installation selon la revendication 8, **caractérisée en ce que** la pression dans l'espace de retenue (S) est réglable au moyen du débit du sas à roue solaire (ZR) et/ou de la variation du débit d'évacuation pour l'air de broyage et les produits d'évaporation par la conduite d'évacuation (F7) à la sortie de l'espace de retenue (S).

10. Installation selon l'une quelconque des revendications 8 ou 9, **caractérisée en ce qu'**un dispositif de mesure de température (TM) pour la mesure de la température de l'air de broyage (ML) sortant du moulin tourbillonnaire à percussion (200) et entrant dans l'espace de retenue (S) au moyen d'une conduite de liaison (F6) est prévu dans la conduite de liaison.

11. Installation selon l'une quelconque des revendications 8 à 10, **caractérisée en ce qu'**un appareil (215) est prévu pour l'injection d'eau (W) dans l'espace de broyage et l'eau à introduire dans l'espace de broyage au moyen de l'appareil pour l'injection d'eau est contrôlable en quantité et dans le temps en fonction de la température, mesurée au moyen de l'appareil de mesure de température (TM), de l'air de broyage à la sortie (211) du moulin tourbillonnaire à percussion (200).

12. Installation selon l'une quelconque des revendications 8 à 11, **caractérisée en ce qu'**il est prévu un dispositif de séparation à sec (108) travaillant par dépression, qui est relié par une conduite pneumatique de transport de matériau (F8) au sas à roue solaire (ZR) de l'espace de retenue (S), dans lequel les particules de cellulose et particules de matière légère sont séparées et évacuées par aspiration sous forme sèche du déchet très finement broyé et sec provoqué par le sas à roue solaire, et de la poudre de plastique ou matière broyée de plastique retraitée et nettoyée est obtenue comme matière résiduelle.

13. Installation selon l'une quelconque des revendications 8 à 12, **caractérisée en ce qu'**il est prévu comme espace de retenue (S) un silo qui est relié par une conduite de liaison (F6) à la sortie (211) du moulin tourbillonnaire à percussion (200) et moyennant quoi une conduite d'évacuation (F7) pour l'air de broyage et les produits d'évaporation est sortie de la zone supérieure du silo et est raccordée à un filtre (107) et éventuellement un condensateur.

14. Installation selon l'une quelconque des revendications 8 à 13, **caractérisée en ce qu'**on utilise comme moulin tourbillonnaire à percussion (200) un réacteur à percussion avec un espace de broyage et plusieurs niveaux de broyage (M1 - M6), qui comprend un tambour (201) commun à tous les niveaux de broyage comme stator avec un arbre (202) équipé de plusieurs niveaux de broyage (M1 - M6) disposés les uns au-dessus des autres, moyennant quoi chaque niveau de broyage est formé par une plaque de logement (203) présentant des percements fixés sur l'arbre avec un grand nombre de couteaux (204) fixés sur la périphérie et une fente de transport (206) pour la matière broyée brute d'un niveau de broyage à un autre niveau de broyage est formée entre la paroi intérieure du tambour (205) et les couteaux (204) et l'axe d'arbre (X) de l'arbre (202) est disposé dans une position verticale et une entrée (209) est reliée à un canal d'arrivée pour l'air de broyage (ML) et un canal d'arrivée (210) pour la matière broyée brute (RM) et une sortie (211) est conçue à proximité de la face supérieure du tambour (201) en sortant de façon radiale, un ventilateur (212) inférieur et un ventilateur (213) supérieur sont disposés et fixés sur l'arbre (202) du rotor, respectivement entre l'entrée (209, 210) et le premier niveau de broyage (M1) et au-dessus du dernier niveau de broyage (M6), un ventilateur avec un débit supérieur d'au moins 10 % au débit du ventilateur (212) inférieur étant prévu comme ventilateur (213) supérieur.

15. Installation selon la revendication 14, **caractérisée en ce qu'**il est prévu sur le côté intérieur du tambour (205) un profilage sous forme de dents de scie (300), agencées perpendiculairement et parallèlement à l'axe de l'arbre (X), avec des flans (301, 302), le premier flan (301), dans le sens de rotation de l'arbre (202), d'une dent de scie (300) étant conçu le long du rayon conçu comme centre par rapport à l'axe de l'arbre (X) et le deuxième flanc (302) forme avec le premier flanc (301) une pointe en dents de scie.

16. Installation selon l'une quelconque des revendications 11 à 15, **caractérisée en ce que** l'appareil (215) pour l'arrivée de l'eau (W) est raccordé au canal d'arrivée (209) pour l'air de broyage (ML).

17. Installation selon l'une quelconque des revendications 8 à 16, **caractérisée en ce qu'**il est prévu pour le traitement de déchets un dispositif d'alimentation de matériau (101) pour les déchets livrés sous forme compactée, comme des balles (B), qui est relié au moyen d'un système de transport (F1) pour les balles (B) à un dispositif (102) pour la décomposition des balles et relie un système de transport (F2, F3) pour le transport des déchets séparés des balles à partir du dispositif (102) pour la décomposition des balles à un dispositif (105) pour le prébroyage des déchets, et **en ce qu'**il est prévu un autre système de transport (F4) pour les déchets prébroyés, qui relie le système de prébroyage (105) à un réservoir de stockage (106), moyennant quoi des dispositifs de découpage de métal (104a, 104b) pour le découpage de déchets de métaux ferreux et de métaux non ferreux à partir des déchets sont attribués aux dispositifs (105) pour le prébroyage dans la zone des dispositifs de transport (F2, F3), **en ce qu'**il est prévu un moulin tourbillonnaire à percussion (200), qui est relié au moyen d'un système de transport (F5) à transport continu, comme une vis sans fin, au réservoir de stockage (106) pour les déchets prébroyés en une matière broyée brute, **en ce qu'**il est prévu un silo qui forme un espace de retenue et dans la zone inférieure duquel est disposé un sas à roue solaire (ZR), et le silo (S) est relié à la sortie (211) du moulin tourbillonnaire à percussion (200) au moyen d'une conduite de liaison (F6) qui est introduite dans la zone supérieure du silo (S) et le silo présente dans la zone supérieure également une conduite d'évacuation (F7), qui est reliée à un filtre (107) et éventuellement un condensateur pour l'évacuation de l'air de broyage ainsi que de produits d'évaporation, et un dispositif de séparation à sec (108) est placé en aval du silo (S), moyennant quoi il est prévu une conduite de transport (F8) pneumatique qui va du sas à roue solaire (ZR) du silo (S) au dispositif de séparation à sec (108), et le dispositif de séparation à sec (108) est pourvu d'une conduite d'aspiration (F9) pour les particules de cellulose et de matière légère ainsi qu'une conduite de transport pneumatique (F10) pour l'entraînement de la matière résiduelle sous la forme de plastique retraité hors du dispositif de séparation à sec, qui est guidé vers un réservoir de stockage (109).

18. Installation selon la revendication 17, **caractérisée en ce que**, pour le traitement de déchets encrassés et humides, il est disposé entre le dispositif (105) pour le prébroyage et le réservoir de stockage (106) pour la matière à broyée brute une installation de lavage (127) équipée d'un dispositif de transport d'évacuation de matière lourde, qui est relié par des dispositifs de transport (F4a, F4b) à l'appareil pour le prébroyage (105) ou au réservoir de stockage (106).
